# EUROPEAN PATENT APPLICATION

(11) **EP 4 765 933 A1**
(43) Date of publication of application: **24.06.2026**
(21) Application number: 24856747.1
(22) Date of filing: 16.08.2024
(51) Int. Cl.: H04W 24/08, H04W 74/04, H04L 1/00, H04W 84/12

(54) **IMPROVED LINK ADAPTATION IN WIRELESS LAN SYSTEM**

(30) Priority: 18.08.2023 KR 20230108598
(71) Applicant: LG Electronics Inc., Yeongdeungpo-gu Seoul 07336 (KR)
(72) Inventor: LIM, Dongguk, Seoul 06772 (KR); CHUN, Jinyoung, Seoul 06772 (KR); CHOI, Jinsoo, Seoul 06772 (KR); PARK, Eunsung, Seoul 06772 (KR); JANG, Insun, Seoul 06772 (KR)
(74) Representative: Plasseraud IP
(86) International application number: PCT/KR2024/012180
(87) International publication number: WO 2025/042135

(57) **Abstract**

The present specification (disclosure) may relate to a method and/or a device related to link adaptation (LA) of a wireless local area network (WLAN) system. For example, the method of the present specification may relate to a method for receiving a signal including a quality of service (QoS) data frame and transmitting a signal related to LA on the basis of the received signal. For example, an STA having received the QoS data frame may transmit acknowledgement (ACK) information related to the QoS data frame and LA information related to QoS data. For example, the LA information may include modulation coding scheme (MCS) information. For example, the QoS data frame may have a preconfigured subtype field value on the basis of triggering of transmission of the LA information. For example, the ACK information may include block ACK (BA) information.

## Description

### TECHNICAL FIELD

The present specification is related to a wireless LAN system, and more specifically, relates to a method and an apparatus supporting enhanced link adaptation by setting appropriate parameters related to a link of a wireless LAN system.

### BACKGROUND ART

Wireless LAN or wireless local area network (WLAN) has been improved in various ways. For example, an Extreme high throughput (EHT) standard may use newly proposed increased bandwidth, an improved PHY layer protocol data unit (PPDU) structure, an improved sequence, a Hybrid automatic repeat request (HARQ) technique, and the like. The EHT standard may be referred to as an IEEE 802.11be standard.

In the EHT standard, to support high throughput and a high data rate, wide bandwidth (for example, 160/320MHz), 16 stream, and/or multi-link (or multi-band) operation, etc. may be used.

In the EHT standard, wide bandwidth (for example, 160/240/320MHz) may be used for high throughput. Also, to efficiently use bandwidth, preamble puncturing and multiple RU transmit may be used.

The WLAN system may be further improved through an Ultra High Reliability (UHR) standard. The UHR system may be referred to as an IEEE 802.11bn standard. The UHR system aims to support ultra-high reliability upon signal transmit for a STA. In the UHR system, various technologies for supporting high throughput, low latency, extended range, etc. are being considered for this.

### DETAILED DESCRIPTION

### TECHNICAL PROBLEM

The present specification is related to transmission and reception of a signal in a wireless LAN system. Specifically, in order to support ultra-high reliability (UHR) discussed in a next-generation wireless LAN system, a link adaptation technique for setting an optimal transmit parameter should be proposed.

In a conventional wireless LAN system, link adaptation could be performed based on a sounding procedure. In the conventional sounding procedure, it was required that a Null Data Packet Announcement (NDPA) frame announcing control information related to sounding and a Null Data Packet (NDP) frame be sequentially transmitted.

In such a conventional sounding procedure or a conventional link adaptation procedure, there is a problem that multiple frames are exchanged and a relatively long time is consumed to determine an appropriate parameter. When a long time is consumed in a procedure for link adaptation, because it is difficult to accurately measure information related to a wireless channel changing at high speed, efficient transmission and reception of a signal over a transmit channel of a wireless LAN may become difficult.

### TECHNICAL SOLUTION

The present specification proposes various technical features. Various technical features of the present specification may be applied to various types of a STA/device.

For example, technical features of the present specification may be related to various wireless communication systems including a Wireless Local Area Network (WLAN) system. For example, technical features of the present specification may be related to a method and/or an apparatus related to LA (Link Adaptation). For example, a method of the present specification may be related to a method of receiving a signal including a Quality of Service (QoS) data frame and transmitting a signal related to LA based on this. For example, a STA having received the QoS data frame may transmit ACK (Acknowledgement) information related to the QoS data frame and LA information related to the QoS data. For example, the LA information may include MCS (Modulation Coding Scheme) information. For example, the QoS data frame may have a value of a preset sub-type field based on triggering transmission of the LA information. For example, the ACK information may be configured as BA (Block ACK) information. For example, a procedure in which an ADDBA request frame and an ADDBA response frame are exchanged may be performed for configuration of the BA information.

### ADVANTAGEOUS EFFECTS

Technical features described in the present specification may generate various advantageous effects. For example, the present specification proposes an enhanced QoS data frame. Because LA (Link Adaptation) information triggered by the QoS data frame proposed in the present specification is delivered relatively quickly without unnecessary delay, there is an advantageous effect of supporting efficient signal transmission and reception over a wireless LAN by accurately measuring information related to a wireless channel changing at high speed.

[In addition, the present specification proposes a BA (block ACK) request/response frame having enhanced technical features and a negotiation procedure related to this. Through this, LA (Link Adaptation) information based on the present specification may be delivered together with a BA frame to deliver information related to a wireless channel more quickly.

### BRIEF DESCRIPTION OF THE DRAWINGS

Figure 1 illustrates an example of a transmitting device and/or receiving device of the present specification.
Figure 2 is a conceptual diagram illustrating the structure of a wireless local area network (WLAN).
Figure 3 is a diagram illustrating a general link setup process.
Figure 4 illustrates an embodiment of multi-link (ML).
Figure 5 illustrates PPDUs transmitted/received by a STA of the present specification.
Figure 6 is a diagram illustrating the layout of resource units (RUs) used for a 20MHz PPDU.
Figure 7 is a diagram illustrating the layout of resource units (RUs) used for a 40MHz PPDU.
Figure 8 is a diagram illustrating the layout of resource units (RUs) used for an 80MHz PPDU.
Figure 9 illustrates operations according to UL-MU.
Figure 10 illustrates an example of channels used/supported/defined within the 2.4 GHz band.
Figure 11 illustrates an example of channels used/supported/defined within the 5 GHz band.
Figure 12 illustrates an example of channels used/supported/defined within the 6 GHz band.
Figure 13 illustrates an example of a MAC frame header.
Figure 14 illustrates a modified example of a transmitting device and/or receiving device according to the present specification.
FIG. 15 is a view showing an example in which an LA operation is performed based on the present specification.
FIG. 16 is a view showing an example of an ADDBA extension element.
FIG. 17 is a view showing a structure of a BA frame.
FIG. 18 is a view showing a structure of a BA control field.
FIG. 19 is an example of a BA information field based on the present specification.
FIG. 20 is a view showing a procedure in which various frames proposed in the present specification are exchanged.
FIG. 21 is a procedure flowchart showing an example of a STA in which the above-described technical feature is performed.
FIG. 22 is a procedure flowchart showing an example of a STA in which the above-described technical feature is performed.

### DESCRIPTION OF EXEMPLARY EMBODIMENTS

As used herein, "A or B" can mean "only A," "only B," or "both A and B." Alternatively, "A or B" can be interpreted as "A and/or B." For example, as used herein, "A, B or C" can mean "only A," "only B," "only C," or "any combination of A, B, and C."

As used herein, a slash (/) or a comma can mean "and/or." For example, "A/B" can mean "A and/or B." Accordingly, "A/B" can mean "only A," "only B," or "both A and B." For example, "A, B, C" may mean "A, B, or C."

In the present specification, "at least one of A and B" may mean "only A," "only B," or "both A and B." Furthermore, in the present specification, the expressions "at least one of A or B" or "at least one of A and/or B" may be interpreted identically to "at least one of A and B."

Furthermore, parentheses used herein may mean "for example." Specifically, when "control information (UHR-Signal field)" is indicated, the "UHR-Signal field" may be suggested as an example of "control information." In other words, the "control information" in the present specification is not limited to the "UHR-Signal field," and the "UHR-Signal field" may be proposed as an example of "control information." Furthermore, even when "control information (UHR-Signal field)" is indicated, the "UHR-Signal field" may be proposed as an example of "control information."

Furthermore, "a/an" as used herein may mean "at least one" or "one or more." Furthermore, terms ending in "(s)" may mean "at least one" or "one or more."

Furthermore, the expressions "based on," "on the basis of," or "according to" used in the present specification mean "based at least in part on," and do not mean "based solely on" a single element one.

Technical features individually described in a single drawing in the present specification may be implemented individually or simultaneously.

The following examples of the present specification may be applied to various wireless communication systems. For example, the following examples of the present specification may be applied to wireless local area network (WLAN) systems. For example, the present specification may be applied to the IEEE 802.11a/g/n/ac/ax/be/bn standards. Furthermore, the examples of the present specification may also be applied to the Ultra High Reliability (UHR) standard or next-generation WLAN standards that enhance IEEE 802.11bn. Additionally, examples of the present specification may be applied to mobile communication systems. For example, it may be applied to mobile communication systems based on Long Term Evolution (LTE) and its evolutions based on the 3rd Generation Partnership Project (3GPP) standards.

Hereinafter, to explain the technical features of the present specification, technical features to which the present specification can be applied will be described.

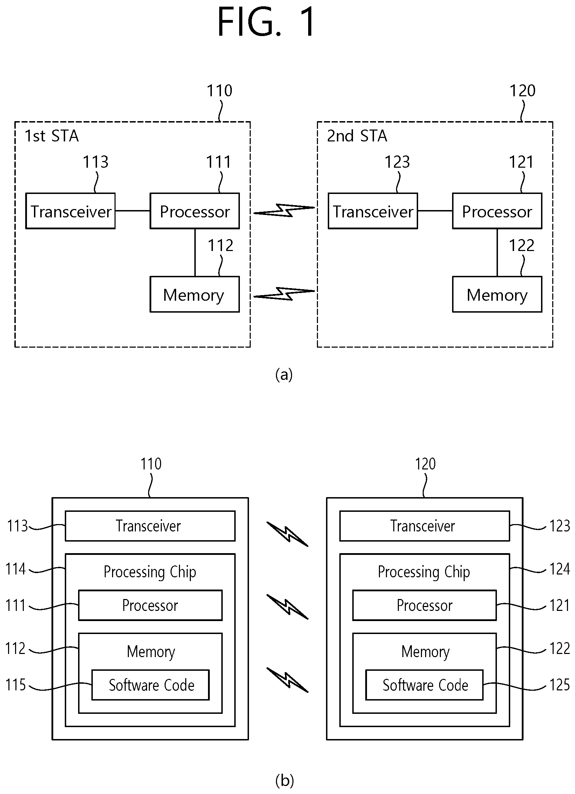

Figure 1 illustrates an example of a transmitting device and/or receiving device of the present specification.

The example of Figure 1 can perform various technical features described below. Figure 1 relates to at least one STA (station). For example, the STAs (110, 120) of the present specification may also be referred to by various names, such as a mobile terminal, a wireless device, a wireless transmit/receive unit (WTRU), a user equipment (UE), a mobile station (MS), a mobile subscriber unit (MS), or simply a user. The STAs (110, 120) of the present specification may also be referred to by various names, such as a network, a base station, a Node-B, an access point (AP), a repeater, a router, or a relay. The STAs (110, 120) of the present specification may be referred to by various names, such as a receiving apparatus, a transmitting apparatus, a receiving STA, a transmitting STA, a receiving device, or a transmitting device.

For example, the STAs (110, 120) of the present specification may function as an access point (AP) or a non-AP. That is, the STAs (110, 120) of the present specification may perform the functions of an AP and/or a non-AP STA. In the present specification, an AP may also be referred to as an AP STA.

The STAs (110, 120) of the present specification may support various communication standards other than the IEEE 802.11 standard. For example, they may support communication standards based on the 3GPP standard (e.g., LTE, LTE-A, 5G NR standards). Furthermore, the STAs of the present specification may be implemented in various devices, such as mobile phones, vehicles, and personal computers. Additionally, the STA of the present specification can support communication for various communication services, such as voice calls, video calls, data communications, and autonomous driving (self-driving).

In the present specification, the STAs (110, 120) may include a medium access control (MAC) and a physical layer interface for wireless media that conforms to the IEEE 802.11 standard.

The STAs (110, 120) are described below based on sub-drawing (a) of FIG. 1.

The first STA (110) may include a processor (111), memory (112), and a transceiver (113). The illustrated processor, memory, and transceiver may be implemented as separate chips, or at least two blocks/functions may be implemented on a single chip.

The transceiver (113) of the first STA performs signal transmission and reception operations. Specifically, it can transmit and receive IEEE 802.11 packets (e.g., IEEE 802.11a/b/g/n/ac/ax/be, etc.).

For example, the first STA (110) can perform the intended operation of an AP. For example, the processor (111) of the AP can receive a signal via the transceiver (113), process the received signal, generate a transmission signal, and perform control for signal transmission. The memory (112) of the AP can store a signal received via the transceiver (113) (e.g., a received signal) and a signal to be transmitted via the transceiver (e.g., a transmitted signal).

For example, the second STA (120) can perform the intended operation of a non-AP STA. For example, the transceiver (123) of the non-AP can perform signal transmission and reception operations. Specifically, it can transmit and receive IEEE 802.11 packets (e.g., IEEE 802.11a/b/g/n/ac/ax/be, etc.).

For example, the processor (121) of the non-AP STA can receive signals via the transceiver (123), process the received signals, generate transmission signals, and perform control for signal transmission. The memory (122) of the non-AP STA can store signals received via the transceiver (123) (e.g., received signals) and signals to be transmitted via the transceiver (e.g., transmitted signals).

For example, the operations of a device designated as an AP in the following specification can be performed by the first STA (110) or the second STA (120). For example, if the first STA (110) is an AP, the operation of the device indicated as the AP is controlled by the processor (111) of the first STA (110), and a related signal may be transmitted or received through the transceiver (113) controlled by the processor (111) of the first STA (110). In addition, control information related to the operation of the AP or the transmission/reception signal of the AP may be stored in the memory (112) of the first STA (110). In addition, if the second STA (110) is an AP, the operation of the device indicated as the AP is controlled by the processor (121) of the second STA (120), and a related signal may be transmitted or received through the transceiver (123) controlled by the processor (121) of the second STA (120). In addition, control information related to the operation of the AP or the transmission/reception signals of the AP may be stored in the memory (122) of the second STA (110).

For example, the operation of a device indicated as a non-AP (or User-STA) in the following specification may be performed in the first STA (110) or the second STA (120). For example, if the second STA (120) is a non-AP, the operation of the device indicated as a non-AP may be controlled by the processor (121) of the second STA (120), and related signals may be transmitted or received through the transceiver (123) controlled by the processor (121) of the second STA (120). In addition, control information related to the operation of the non-AP or the transmission/reception signals of the AP may be stored in the memory (122) of the second STA (120). For example, if the first STA (110) is a non-AP, the operation of a device designated as a non-AP is controlled by the processor (111) of the first STA (110), and related signals may be transmitted or received through a transceiver (113) controlled by the processor (111) of the first STA (120). Furthermore, control information related to the operation of the non-AP or the transmission/reception signals of the AP may be stored in the memory (112) of the first STA (110).

In the following specifications, (transmitting/receiving) STA, first STA, second STA, STA1, STA2, AP, first AP, second AP, AP1, AP2, (transmitting/receiving) Terminal, (transmitting/receiving) device, (transmitting/receiving) apparatus, network, etc., may refer to the STA (110, 120) in Figure 1. For example, devices indicated without specific drawing symbols as (transmitting/receiving) STA, First STA, Second STA, STA1, STA2, AP, First AP, Second AP, AP1, AP2, (transmit/receive) terminal, (transmit/receive) device, (transmit/receive) apparatus, network, etc., may also refer to the STA (110, 120) in Figure 1. For example, in the following example, the operation of various STAs transmitting and receiving signals (e.g., PPDU) may be performed by the transceivers (113, 123) in Figure 1. Additionally, in the following example, the actions of various STAs generating transmission/reception signals or performing data processing or calculations in advance for transmission/reception signals may be performed by the processor (111, 121) in Figure 1. For example, an example of the operation of generating transmission/reception signals or performing data processing or calculations in advance for transmission/reception signals is: 1) determining/obtaining/configuring/calculating/decoding/encoding the bit information of the subfields (SIG, STF, LTF, Data) included in the PPDU; 2) determining/configuring/acquiring time resources or frequency resources (e.g., subcarrier resources) used for the subfields (SIG, STF, LTF, Data) included in the PPDU; 3) determining/configuring/acquiring specific sequences (e.g., pilot sequences, STF/LTF sequences, extra sequences applied to SIG) used for the subfields (SIG, STF, LTF, Data) included in the PPDU; 4) power control actions and/or power saving actions applied to STA, 5) actions related to determining/obtaining/configuring/calculating/decoding/encoding ACK signals. Additionally, in the following example, various information (e.g., information related to fields/subfields/control fields/parameters/power, etc.) used by various STAs for determining/acquiring/configuring/calculating/decoding/encoding transmission/reception signals may be stored in the memory (112, 122) shown in Figure 1.

The device/STA of sub-drawing (a) of FIG. 1 described above can be modified as shown in sub-drawing (b) of FIG. 1. The STAs (110, 120) of the present specification will now be described based on sub-drawing (b) of FIG. 1.

For example, the transceivers (113, 123) illustrated in sub-drawing (b) of FIG. 1 can perform the same functions as the transceivers illustrated in sub-drawing (a) of FIG. 1 described above. For example, the processing chip (114, 124) illustrated in sub-drawing (b) of FIG. 1 may include a processor (111, 121) and a memory (112, 122). The processor (111, 121) and the memory (112, 122) illustrated in sub-drawing (b) of FIG. 1 may perform the same functions as the processor (111, 121) and the memory (112, 122) illustrated in sub-drawing (a) of FIG. 1 described above.

The mobile terminal, wireless device, Wireless Transmit/Receive Unit (WTRU), User Equipment (UE), Mobile Station (MS), Mobile Subscriber Unit, user, user STA, network, Base Station, Node-B, Access Point (AP), repeater, router, relay, receiving device, transmitting device, receiving STA, transmitting STA, receiving Device, transmitting Device, receiving Apparatus, and/or transmitting Apparatus described below may refer to the STA (110, 120) illustrated in the sub-drawings (a)/(b) of FIG. 1, or may refer to the processing chip (114, 124) illustrated in the sub-drawing (b) of FIG. 1. That is, the technical feature of the present specification may be performed in the STA (110, 120) illustrated in the sub-drawings (a)/(b) of FIG. 1, or may be performed only in the processing chip (114, 124) illustrated in the sub-drawings (b) of FIG. 1. For example, the technical feature that the transmitting STA transmits a control signal may be understood as a technical feature that the control signal generated in the processor (111, 121) illustrated in the sub-drawings (a)/(b) of FIG. 1 is transmitted through the transceiver (113, 123) illustrated in the sub-drawings (a)/(b) of FIG. 1. Alternatively, the technical feature that the transmitting STA transmits a control signal may be understood as a technical feature that the control signal to be transmitted to the transceiver (113, 123) is generated in the processing chip (114, 124) illustrated in the sub-drawings (b) of FIG. 1.

For example, the technical feature of a receiving STA receiving a control signal can be understood as a technical feature of a control signal being received by a transceiver (113, 123) illustrated in sub-drawing (a) of FIG. 1. Alternatively, the technical feature of a receiving STA receiving a control signal can be understood as a technical feature of a control signal received by a transceiver (113, 123) illustrated in sub-drawing (a) of FIG. 1 being acquired by a processor (111, 121) illustrated in sub-drawing (a) of FIG. 1. Alternatively, the technical feature of a receiving STA receiving a control signal can be understood as a technical feature of a control signal received by a transceiver (113, 123) illustrated in sub-drawing (b) of FIG. 1 being acquired by a processing chip (114, 124) illustrated in sub-drawing (b) of FIG. 1.

Referring to sub-drawing (b) of FIG. 1, software code (115, 125) may be included in the memory (112, 122). The software code (115, 125) may include instructions that control the operation of the processor (111, 121). The software code (115, 125) may be included in various programming languages.

The processor (111, 121) or processing chip (114, 124) illustrated in FIG. 1 may include an application-specific integrated circuit (ASIC), another chipset, logic circuit, and/or data processing device. The processor may be an application processor (AP). For example, the processor (111, 121) or processing chip (114, 124) illustrated in FIG. 1 may include at least one of a digital signal processor (DSP), a central processing unit (CPU), a graphics processing unit (GPU), and a modem (modulator and demodulator). For example, the processors (111, 121) or processing chips (114, 124) illustrated in FIG. 1 may be a SNAPDRAGON^{®} series processor manufactured by Qualcomm^{®}, an EXYNOS^{®} series processor manufactured by Samsung^{®}, an A series processor manufactured by Apple^{®}, a HELIO^{®} series processor manufactured by MediaTek^{®}, an ATOM^{®} series processor manufactured by INTEL^{®}, or an enhanced processor thereof.

In the present specification, "uplink" may refer to a link for communication from a non-AP STA to an AP STA, and uplink PPDUs/packets/signals, etc. may be transmitted via the uplink. Furthermore, in the present specification, "downlink" may refer to a link for communication from an AP STA to a non-AP STA, and downlink PPDUs/packets/signals, etc. may be transmitted via the downlink.

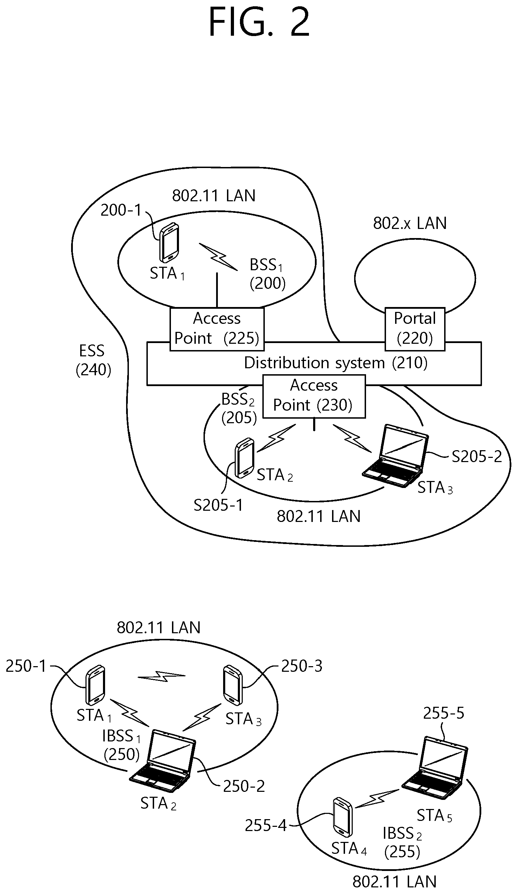

Figure 2 is a conceptual diagram illustrating the structure of a wireless local area network (WLAN).

The top of Figure 2 illustrates the structure of an infrastructure BSS (basic service set) of the Institute of Electrical and Electronic Engineers (IEEE) 802.11 standard.

Referring to the top of Figure 2, the wireless LAN system may include one or more infrastructure BSSs (200, 205) (hereinafter referred to as BSS). A BSS (200, 205) is a set of APs (access points, 225) and STAs (stations, 200-1) that have successfully synchronized and can communicate with each other; it does not refer to a specific area. A BSS (205) may include one or more connectable STAs (205-1, 205-2) connected to a single AP (230).

A BSS may include at least one STA, an AP (225, 230) that provides a distribution service, and a distribution system (DS, 210) that connects multiple APs.

A distributed system (210) can connect multiple BSSs (200, 205) to implement an extended service set (ESS) 240. An ESS (240) can be used as a term to indicate a network formed by connecting one or more APs through the distributed system (210). APs included in a single ESS (240) can have the same SSID (service set identifier).

A portal (220) can serve as a bridge, connecting a wireless LAN network (IEEE 802.11) to another network (e.g., 802.X).

In a BSS, such as the upper portion of FIG. 2, a network between APs (225, 230) and a network between APs (225, 230) and STAs (200-1, 205-1, 205-2) can be implemented. However, it may also be possible to establish a network and perform communication between STAs without an AP (225, 230). A network that establishes a network and performs communication between STAs without an AP (225, 230) is defined as an ad-hoc network or an independent basic service set (IBSS).

The bottom of Figure 2 is a conceptual diagram illustrating an IBSS.

Referring to the bottom of Figure 2, an IBSS is a BSS that operates in ad-hoc mode. Since an IBSS does not include an AP, there is no centralized management entity. That is, in the IBSS, STAs (250-1, 250-2, 250-3, 255-4, 255-5) are managed in a distributed manner. In IBSS, all STAs (250-1, 250-2, 250-3, 255-4, 255-5) can be mobile STAs, and access to distributed systems is not permitted, forming a self-contained network.

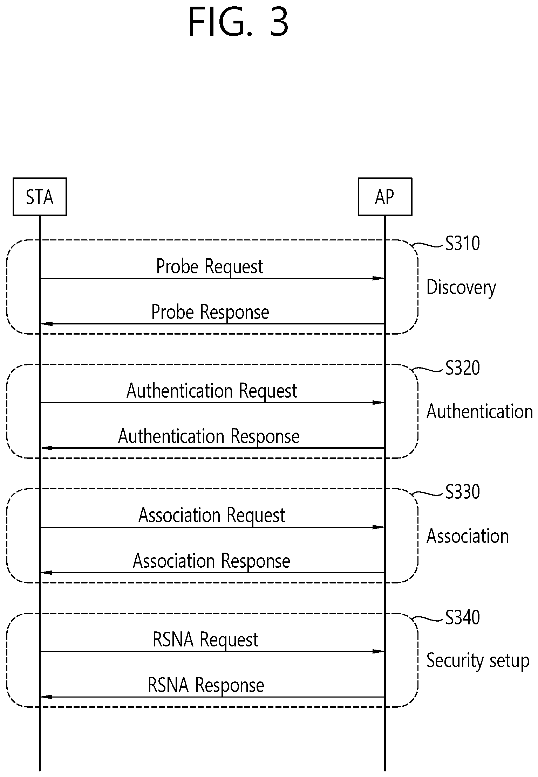

Figure 3 is a diagram illustrating a typical link setup process.

In the illustrated step S310, a STA may perform a network discovery operation. This network discovery operation may include scanning. That is, for a STA to access a network, it must find a network it can join. Before joining a wireless network, a STA must identify compatible networks. The process of identifying networks in a specific area is called scanning. Scanning methods include active scanning and passive scanning.

Figure 3 illustrates a network discovery operation that includes an active scanning process as an example. In active scanning, a STA performing scanning transmits a probe request frame to discover nearby APs while moving through channels and awaits a response. The responder transmits a probe response frame to the STA that transmitted the probe request frame in response to the probe request frame. Here, the responder may be the STA that last transmitted a beacon frame in the BSS of the channel being scanned. In a BSS, the AP transmits the beacon frame, making it the responder. In an IBSS, STAs within the IBSS take turns transmitting beacon frames, so the responder is not fixed. For example, a STA that transmits a probe request frame on channel 1 and receives a probe response frame on channel 1 may store the BSS-related information contained in the received probe response frame and move to the next channel (e.g., channel 2) to perform scanning in the same manner (e.g., transmitting and receiving probe requests and responses on channel 2).

Although not shown in the example of Figure 3, the scanning operation can also be performed passively. A STA performing scanning based on passive scanning may wait for a beacon frame while moving between channels. A beacon frame, a management frame in IEEE 802.11, announces the presence of a wireless network and is periodically transmitted to scanning STAs to discover and join the network. In the BSS, the AP periodically transmits beacon frames, while in the IBSS, STAs within the IBSS take turns transmitting beacon frames. When a scanning STA receives a beacon frame, it stores the BSS information contained in the beacon frame and moves to a different channel, recording the beacon frame information on each channel. Upon receiving a beacon frame, the STA stores the BSS-related information contained in the received beacon frame and moves to the next channel, performing scanning on the next channel using the same method.

A STA that discovers a network can perform an authentication process in step S320. This authentication process can be referred to as the first authentication process to clearly distinguish it from the security setup operation of step S340, described below. The authentication process of S320 may include a process in which the STA transmits an authentication request frame to the AP, and the AP transmits an authentication response frame to the STA in response. The authentication frame used for the authentication request/response corresponds to a management frame.

The authentication frame may include information such as an authentication algorithm number, an authentication transaction sequence number, a status code, a challenge text, a Robust Security Network (RSN), and a Finite Cyclic Group (FCG).

The STA may transmit the authentication request frame to the AP. The AP may determine whether to grant authentication to the STA based on the information contained in the received authentication request frame. The AP may provide the STA with the result of the authentication process via an authentication response frame.

A successfully authenticated STA may perform the connection process based on step S330. The association process involves the STA sending an association request frame to the AP, and the AP responding by sending an association response frame to the STA. For example, the association request frame may include information related to various capabilities, such as a beacon listen interval, a service set identifier (SSID), supported rates, supported channels, RSN, mobility domain, supported operating classes, a Traffic Indication Map Broadcast request, and interworking service capabilities. For example, the association response frame may include information related to various capabilities, status codes, Association ID (AID), supported rates, Enhanced Distributed Channel Access (EDCA) parameter sets, Received Channel Power Indicator (RCPI), Received Signal to Noise Indicator (RSNI), mobility domains, timeout intervals (association comeback times), overlapping BSS scan parameters, TIM broadcast responses, QoS maps, etc.

Subsequently, in step S340, the STA may perform a security setup process. The security setup process in step S340 may include, for example, a process of setting up a private key through four-way handshaking using an Extensible Authentication Protocol over LAN (EAPOL) frame.

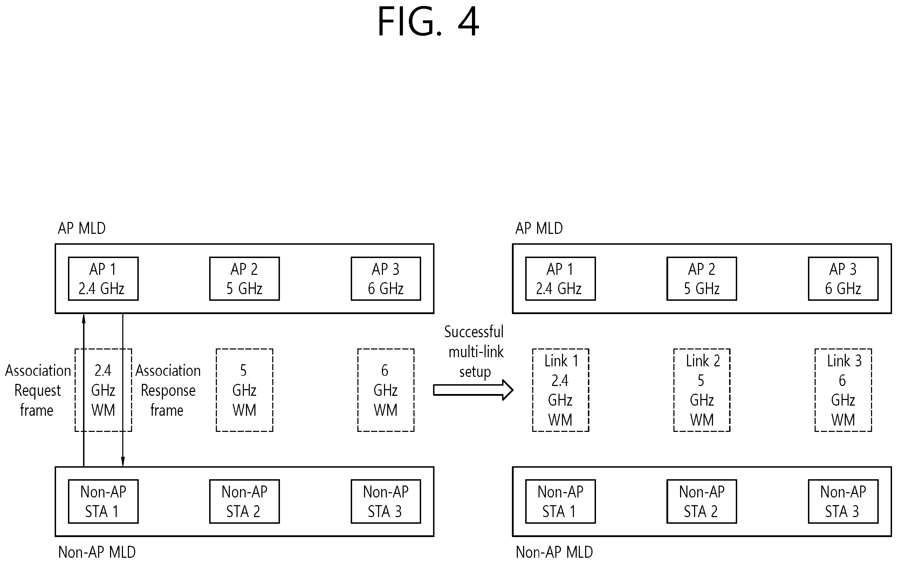

Figure 4 illustrates an embodiment of a multi-link (ML).

As illustrated in Figure 4, multiple multi-link devices (MLDs) can communicate via a multi-link. The MLDs can be categorized into AP MLDs, which include multiple AP STAs, and non-AP MLDs, which include multiple non-AP STAs. Specifically, the AP MLD may include affiliated APs (e.g., AP STAs), and the non-AP MLD may include affiliated STAs (e.g., non-AP STAs, or user-STAs).

The multi-link may include a first link and a second link, and different channels/subchannels/frequency resources may be allocated to the first and second links. The first and second multi-links may be identified using a 4-bit (or other n-bit) link ID. The first and second links may be configured in the same 2.4 GHz, 5 GHz, or 6 GHz band. Alternatively, the first and second links may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link, in which AP1 and non-AP1 operate, may be defined as a channel/subchannel/frequency resource within the 2.4 GHz band. Furthermore, in the example of FIG. 4, the second link, in which AP2 and non-AP2 operate, may be defined as a channel/subchannel/frequency resource within the 5 GHz band. Additionally, in the example of FIG. 4, the third link where AP3 and non-AP3 operate can be defined as a channel/subchannel/frequency resource within the 6 GHz band.

In the example of FIG. 4, AP1 can initiate a multilink setup procedure (ML setup procedure) by transmitting an Association Request frame to non-AP STA1. In the example of FIG. 4, non-AP STA1 can transmit an Association Response frame in response to the Association Request frame. Each AP (e.g., AP1/2/3) depicted in FIG. 4 may be identical to the APs depicted in FIG. 1 and/or FIG. 2, and each non-AP (e.g., non-AP1/2/3) depicted in FIG. 4 may be identical to the STAs (e.g., user STAs or non-AP STAs) depicted in FIG. 1 and/or FIG. 2.

The specific features of the present specification are not limited to the specific features depicted in FIG. 4. That is, the number of links can be defined in various ways, and multiple links can be defined in various ways within at least one band.

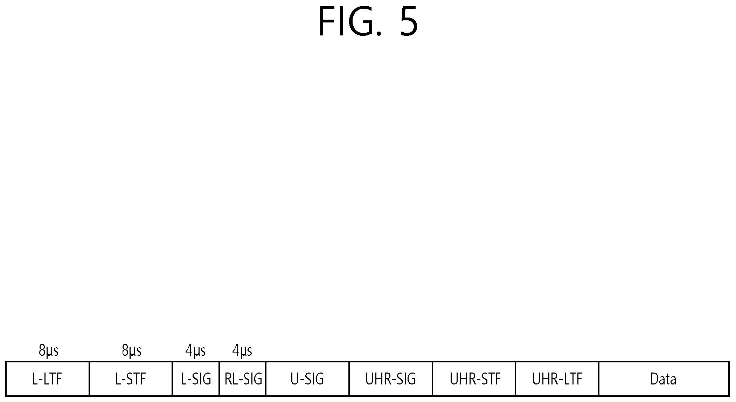

Figure 5 illustrates a PPDU (physical protocol data unit or physical layer (PHY) protocol data unit) transmitted/received by a STA of the present specification.

A STA (e.g., an AP STA, a non-AP STA, an AP MLD, or a non-AP MLD) of the present specification can transmit and/or receive the PPDU of Figure 5. The PPDU described herein may have, for example, the structure of Figure 5. Furthermore, the PPDU described herein, an Ultra High Reliability (UHR) PPDU, may be referred to by various names, such as a transmission PPDU, a reception PPDU, a first type PPDU, or an Nth type PPDU. The PPDU described herein may be used in a WLAN system defined according to IEEE 802.11bn and/or a next-generation WLAN system that enhances IEEE 802.11bn.

The PPDU of Figure 5 may relate to various PPDU types used in a UHR system. For example, the example of FIG. 5 can be used for at least one of single-user (SU) mode/type/transmission, multi-user (MU) mode/type/transmission, and null data packet (NDP) mode/type/transmission related to channel sounding. For example, if the example of FIG. 5 relates to NDP, the illustrated Data field may be omitted. If the PPDU of FIG. 5 is used for Trigger-based (TB) mode, the UHR-SIG of FIG. 5 may be omitted. In other words, a STA that has received a Trigger frame for UL-MU (Uplink-MU) communication may transmit a PPDU with the UHR-SIG omitted in the example of FIG. 5.

In FIG. 5, L-STF or UHR-LTF may be referred to as a preamble or physical preamble, and may be generated/transmitted/received/acquired/decoded in the physical layer (included in the transmitting/receiving STA).

Each block illustrated in FIG. 5 may be referred to as a field/subfield/signal, etc. The names of these fields/subfields/signals may be, as illustrated in FIG. 5, a legacy short training field (L-STF), a legacy long training field (L-LTF), a legacy signal (L-SIG), a repeated L-SIG (RL-SIG), Universal Signal (U-SIG), UHR-signal (UHR-SIG), etc.

The subcarrier spacing of the L-STF, L-LTF, L-SIG, RL-SIG, U-SIG, and UHR-SIG fields in FIG. 5 may be set to 312.5 kHz, and the subcarrier spacing of the UHR-STF, UHR-LTF, and Data fields may be set to 78.125 kHz. That is, the tone indices (or subcarrier indices) of the L-STF, L-LTF, L-SIG, RL-SIG, U-SIG, and UHR-SIG fields may be expressed in units of 312.5 kHz, and the tone indices (or subcarrier indices) of the UHR-STF, UHR-LTF, and Data fields may be expressed in units of 78.125 kHz.

In the PPDU in FIG. 5, L-LTF and L-STF may be identical to conventional fields (e.g., non-HT LTF and non-HT STF defined in conventional WLAN standards).

The L-SIG field of FIG. 5 may include, for example, 24 bits of bit information. For example, the 24 bits of information may include a 4 bit Rate field, a 1 bit Reserved bit, a 12 bit Length field, a 1 bit Parity bit, and a 6 bit Tail bit. For example, the 12 bit Length field may include information about the length or time duration of the PPDU. For example, the value of the 12 bit Length field may be determined based on the type of the PPDU. For example, if the PPDU is a non-HT (non-High Throughput), HT (High Throughput), VHT (Very High Throughput) PPDU, or an EHT (extremely high throughput) PPDU or UHR PPDU, the value of the Length field may be determined as a multiple of 3. For example, if the PPDU is a HE PPDU, the value of the Length field may be determined as "a multiple of 3 + 1" or "a multiple of 3 + 2". In other words, for non-HT, HT, VHT PPDUs, EHT PPDUs, and UHR PPDUs, the Length field value can be determined as a multiple of 3. For HE (High Efficiency) PPDUs, the Length field value can be determined as "a multiple of 3 + 1" or "a multiple of 3 + 2." In other words, the Length field in a UHR PPDU is set to a value satisfying the condition that the remainder is zero when LENGTH is divided by 3.

For example, a (non-AP and AP) STA can apply BCC encoding based on a code rate of 1/2 to the 24-bit information in the L-SIG field. The transmitting STA can then acquire 48 BCC encoding bits. BPSK modulation can be applied to the 48 encoding bits, generating 48 BPSK symbols. The transmitting STA can map 48 BPSK symbols to positions other than the pilot subcarriers {subcarrier indices -21, -7, +7, +21} and the DC subcarrier {subcarrier index 0}. Consequently, the 48 BPSK symbols can be mapped to subcarrier indices -26 to -22, -20 to -8, -6 to -1, +1 to +6, +8 to +20, and +22 to +26. The transmitting STA can additionally map signals {-1, -1, -1, 1} to subcarrier indices {-28, -27, +27, +28}. These signals can be used for channel estimation for the frequency domain corresponding to {-28, -27, +27, +28}.

For example, (non-AP and AP) STAs can generate RL-SIGs that are generated identically to L-SIGs. BPSK modulation can be applied to RL-SIG. The receiving (non-AP and AP) STA can determine whether the received PPDU is a HE PPDU, EHT PPDU, or UHR PPDU based on the presence of RL-SIG. In other words, the receiving (non-AP and AP) STA can determine whether the received PPDU is a HE PPDU, EHT PPDU, or UHR PPDU if RL-SIG is present. In other words, the receiving (non-AP and AP) STA can determine whether the received PPDU is a non-HT PPDU, HT PPDU, or VHT PPDU if RL-SIG is not present. In other words, the RL-SIG field is a repeat of the L-SIG field and is used to differentiate a UHR PPDU from a non-HT PPDU, HT PPDU, and VHT PPDU.

A Universal Signal-Integrated (U-SIG) may be inserted after the RL-SIG in Figure 5. The U-SIG may be referred to by various names, such as the first SIG field, the first SIG, the first type SIG, the control signal, the control signal field, the first (type) control signal, the common control field, and the common control signal.

The U-SIG may contain N bits of information and may include information for identifying the type of the EHT PPDU. For example, the U-SIG may be composed based on two symbols (e.g., two consecutive/contiguous OFDM symbols). Each symbol for the U-SIG (e.g., the OFDM symbol) may have a duration of 4 µs. Each symbol of the U-SIG may be used to transmit 26 bits of information. For example, each symbol of the U-SIG may be transmitted and received based on 52 data tones and 4 pilot tones.

For example, A bit information (e.g., 52 uncoded bits) can be transmitted through U-SIG, and the first symbol of U-SIG can transmit the first X bits of information (e.g., 26 uncoded bits) out of the total A bit information, and the second symbol of U-SIG can transmit the remaining Y bits of information (e.g., 26 uncoded bits) out of the total A bit information. For example, the transmitting STA can obtain 26 uncoded bits included in each U-SIG symbol. The transmitting STA can perform convolutional encoding (e.g., BCC encoding) based on a rate of R=1/2 to generate 52 coded bits, and perform interleaving on the 52 coded bits. The transmitting STA can perform BPSK modulation on the interleaved 52 BPSK symbols to generate 52 BPSK symbols allocated to each U-SIG symbol. A single U-SIG symbol can be transmitted based on 56 tones (subcarriers) ranging from subcarrier index - 28 to subcarrier index +28, excluding DC index 0. The 52 BPSK symbols generated by the transmitting STA can be transmitted based on the remaining tones (subcarriers) excluding the pilot tones -21, -7, +7, and +21.

For example, the A-bit information (e.g., 52 uncoded bits) transmitted by the U-SIG can include a CRC field (e.g., a 4-bit field) and a tail field (e.g., a 6-bit field). The CRC field and tail field can be transmitted via the second symbol of the U-SIG. The CRC field can be generated based on the 26 bits allocated to the first symbol of the U-SIG and the remaining 16 bits within the second symbol, excluding the CRC/tail field, and can be generated based on a conventional CRC calculation algorithm. Additionally, the tail field can be used to terminate the trellis of the convolutional decoder and can be set to "000000," for example.

The A-bit information (e.g., 52 uncoded bits) transmitted by the U-SIG (or U-SIG field) can be divided into version-independent bits and version-dependent bits. For example, the size of the version-independent bits can be fixed or variable. For example, the version-independent bits can be assigned only to the first symbol of the U-SIG, or the version-independent bits can be assigned to both the first and second symbols of the U-SIG. For example, the version-independent bits and version-dependent bits can be referred to by various names, such as the first control bit and the second control bit.

For example, the version-independent bits of the U-SIG can include a 3-bit PHY version identifier. For example, a 3-bit PHY version identifier may include information related to the PHY version of a transmitted/received PPDU. For example, a first value (e.g., a value of 000) of the 3-bit PHY version identifier may indicate that the transmitted/received PPDU is an EHT PPDU. Additionally, a second value (e.g., a value of 001) of the 3-bit PHY version identifier may indicate that the transmitted/received PPDU is a UHR PPDU.

In other words, when an (AP/non-AP) STA transmits an EHT PPDU, it may set the 3-bit PHY version identifier to the first value. In other words, a receiving (AP/non-AP) STA may determine that the received PPDU is an EHT PPDU based on a PHY version identifier having the first value, and may determine that the received PPDU is a UHR PPDU based on a PHY version identifier having the second value.

For example, the version-independent bits of U-SIG may include a 1-bit UL/DL flag field. The first value of the 1-bit UL/DL flag field relates to UL communication, and the second value of the UL/DL flag field relates to DL communication.

For example, the version-independent bits of the U-SIG may include information about the length of the TXOP and information about the BSS color ID.

For example, if the UHR PPDU is classified into various types (e.g., a type related to SU transmission (performed based on UL or DL), a type related to DL transmission, a type related to NDP transmission, a type related to DL non-MU-MIMO, a type related to DL MU-MIMO, a type related to Multi-AP operation, a type related to CBF (Coordinated beamforming), SR (Spatial Reuse), a type related to C-OFDMA (Coordinated OFDMA), a type related to C-TDMA (Coordinated TDMA)), information about the type of the EHT PPDU (e.g., 2-bit or 3-bit information) may be included in the version-dependent bits of the U-SIG.

For example, U-SIG may include 1) a bandwidth field including information about bandwidth, 2) a field including information about the Modulation and Coding Scheme (MCS) technique applied to UHR-SIG, 3) an indication field including information about whether dual subcarrier modulation (DCM) technique is applied to UHR-SIG, 4) a field including information about the number of symbols used for UHR-SIG, 5) a field including information about whether UHR-SIG is generated across the entire band, 6) a field including information about the type of UHR-LTF/STF, and 7) a field indicating the length of UHR-LTF and the CP length.

Preamble puncturing may be applied to the PPDU of FIG. 5. Preamble puncturing means applying puncturing to a portion of the entire band of the PPDU (e.g., the secondary 20 MHz band). For example, when an 80 MHz PPDU is transmitted, the STA can apply puncturing to the secondary 20 MHz band within the 80 MHz band and transmit the PPDU only through the primary 20 MHz band and the secondary 40 MHz band.

For example, the preamble puncturing pattern can be preset. For example, if the first puncturing pattern is applied, puncturing can be applied only to the secondary 20 MHz band within the 80 MHz band. For example, if the second puncturing pattern is applied, puncturing can be applied only to one of the two secondary 20 MHz bands included in the secondary 40 MHz band within the 80 MHz band. For example, if the third puncturing pattern is applied, puncturing can be applied only to the secondary 20 MHz band included in the primary 80 MHz band within the 160 MHz band (or 80+80 MHz band). For example, when the fourth puncturing pattern is applied, puncturing may be applied to at least one 20 MHz channel not included in the primary 40 MHz band, while the primary 40 MHz band is present within the 160 MHz band (or the 80+80 MHz band).

Information related to preamble puncturing applied to a PPDU may be included in the U-SIG and/or UHR-SIG. For example, the first field of the U-SIG may include information related to the contiguous bandwidth of the PPDU, and the second field of the U-SIG may include information related to preamble puncturing applied to the PPDU.

For example, the U-SIG and UHR-SIG may include information related to preamble puncturing based on the following method. If the bandwidth of the PPDU exceeds 80 MHz, the U-SIG may be configured individually in 80 MHz units. For example, if the bandwidth of a PPDU is 160 MHz, the PPDU may include a first U-SIG for a first 80 MHz band and a second U-SIG for a second 80 MHz band. In this case, a first field of the first U-SIG may include information about the 160 MHz bandwidth, and a second field of the first U-SIG may include information about preamble puncturing applied to the first 80 MHz band (e.g., information about a preamble puncturing pattern). In addition, a first field of the second U-SIG may include information about the 160 MHz bandwidth, and a second field of the second U-SIG may include information about preamble puncturing applied to the second 80 MHz band (e.g., information about a preamble puncturing pattern). Meanwhile, the UHR-SIG contiguous to the first U-SIG may include information about preamble puncturing applied to the second 80 MHz band (e.g., information about a preamble puncturing pattern), and the UHR-SIG contiguous to the second U-SIG may include information about preamble puncturing applied to the first 80 MHz band (e.g., information about a preamble puncturing pattern).

Additionally or alternatively, the U-SIG and UHR-SIG may include information related to preamble puncturing based on the following methods. The U-SIG may include information related to preamble puncturing for all bands (e.g., information related to the preamble puncturing pattern). That is, the UHR-SIG does not include information related to preamble puncturing, and only the U-SIG may include information related to preamble puncturing (e.g., information related to the preamble puncturing pattern).

The U-SIG may be configured in 20 MHz units. For example, if an 80 MHz PPDU is configured, the U-SIG may be duplicated. That is, four identical U-SIGs may be included within the 80 MHz PPDU. PPDUs exceeding the 80 MHz bandwidth may include different U-SIGs.

The UHR-SIG of FIG. 5 may include control information for a receiving STA. The UHR-SIG may be transmitted over at least one symbol, each symbol having a length of 4 µs. Information related to the number of symbols used for the UHR-SIG may be included in the U-SIG.

The UHR-SIG provides additional signals to the U-SIG field to enable the STA to interpret/decode the UHR PPDU. The UHR-SIG field may include U-SIG overflow bits common to all users. The UHR-SIG field also includes resource allocation information, allowing the STA to look up resources used in fields including the data field, UHR-STF, and UHR-LTF (e.g., UHR modulated fields of a UHR PPDU).

The frequency resources of the UHR-LTF, UHR-STF, and data fields illustrated in Figure 5 can be determined based on resource units (RUs) defined by multiple subcarriers/tones. That is, the UHR-LTF, UHR-STF, and data fields of the present specification can be transmitted/received via resource units (RUs) defined by multiple subcarriers/tones.

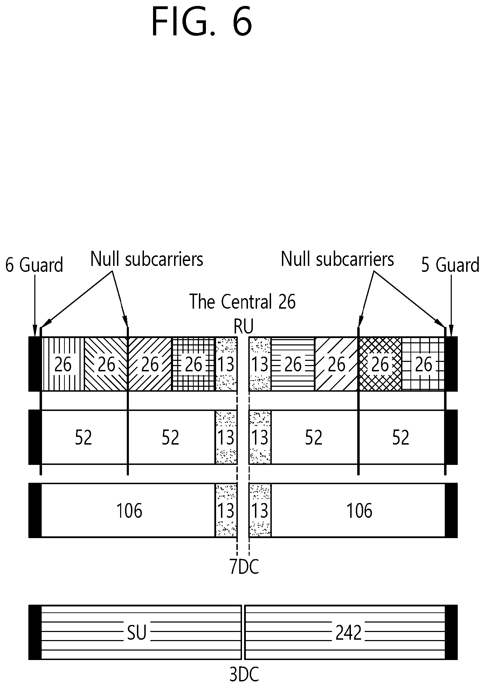

Figure 6 is a diagram illustrating the layout of resource units (RUs) used for a 20MHz PPDU. That is, the UHR-LTF, UHR-STF, and/or data fields included in a 20MHz PPDU can be transmitted/received via at least one of the various RUs defined in Figure 6.

As illustrated at the top of Figure 6, 26 units (e.g., units corresponding to 26 tones) can be arranged. In the leftmost band of the 20 MHz band, six tones can be used as a guard band, and in the rightmost band of the 20 MHz band, five tones can be used as a guard band. Furthermore, seven DC tones can be inserted into the center band (i.e., the DC band), and 26 units, corresponding to 13 tones each, can exist on the left and right sides of the DC band. Furthermore, 26, 52, and 106 units can be allocated to other bands. Each unit can be assigned to a receiving station, i.e., a user.

Meanwhile, the RU arrangement of Figure 6 can be utilized not only for multiple users (MUs) but also for single users (SUs). In this case, as shown at the bottom of Figure 6, a single 242-unit can be used, in which case three DC tones can be inserted.

In the example of Fig. 6, RUs of various sizes, such as 26-RU, 52-RU, 106-RU, and 242-RU, are proposed. Since the specific sizes of these RUs can be expanded or increased, the present embodiment is not limited to the specific sizes of each RU (e.g., the number of corresponding tones). In the present specification, N-RU may be represented as N-tone RU, etc. For example, 26-RU may be represented as 26-tone RU.

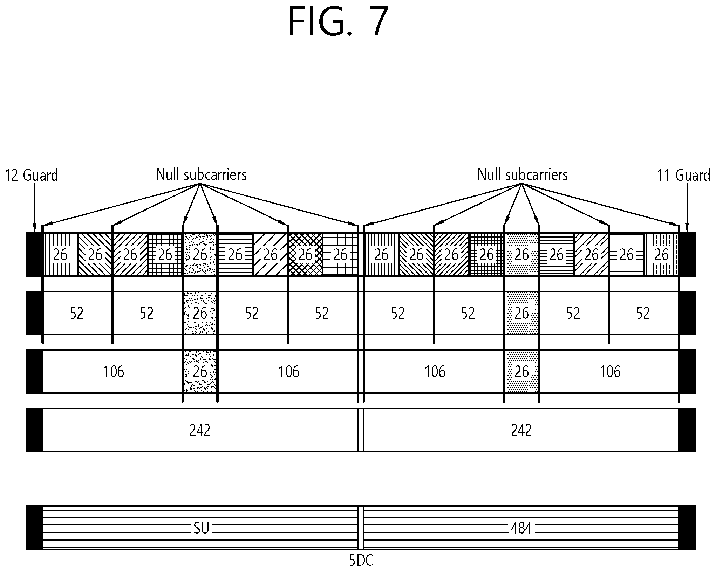

Figure 7 is a diagram illustrating the layout of resource units (RUs) used for a 40MHz PPDU.

Similar to the example in Figure 6, which used RUs of various sizes, the example in Figure 7 can also use RUs of 26, 52, 106, 242, and 484 RUs. Furthermore, five DC tones can be inserted at the center frequency, 12 tones can be used as guard bands in the leftmost band of the 40MHz band, and 11 tones can be used as guard bands in the rightmost band of the 40MHz band.

Also, as illustrated, a 484-RU can be used for a single user. Similarly to the example in Figure 6, the specific number of RUs can be varied.

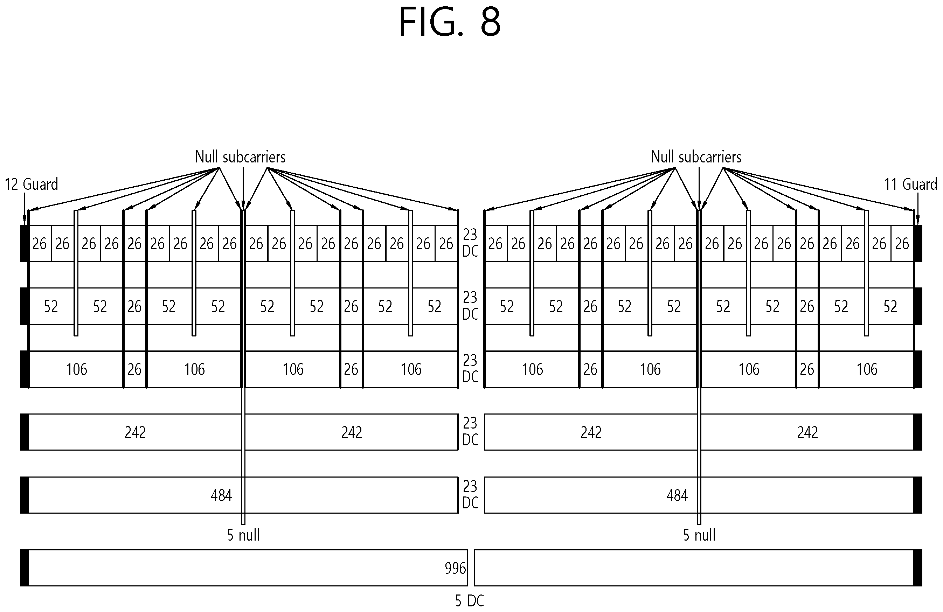

Figure 8 is a diagram illustrating the layout of resource units (RUs) used for an 80MHz PPDU. The arrangement of resource units (RUs) used in the present specification may vary. For example, the arrangement of resource units (RUs) used in the 80 MHz band may vary.

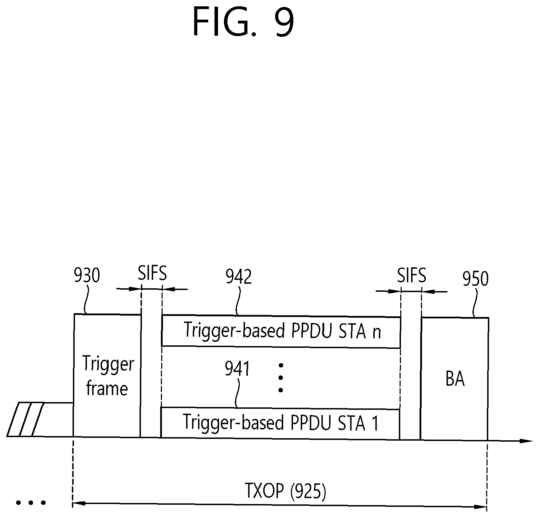

Figure 9 illustrates the operation according to UL-MU. As illustrated, a transmitting STA (e.g., an AP) may acquire a TXOP (925) by performing channel access through contending (e.g., backoff operation) and transmit a Trigger frame (930). That is, the transmitting STA (e.g., an AP) may transmit a PPDU including the Trigger frame (930). Upon receiving the PPDU including the Trigger frame, a TB (trigger-based) PPDU is transmitted after a delay equal to SIFS.

TB PPDUs (941, 942) are transmitted at the same time and may be transmitted from multiple STAs (e.g., user STAs) whose AIDs are indicated in the Trigger frame (930). The ACK frame (950) for the TB PPDU can be implemented in various forms. For example, the ACK frame (950) for the TB PPDU can be implemented in the form of a BA (block ACK).

In FIG. 9, transmission(s) of the Trigger Frame (930), TB PPDUs (941, 942), and/or the ACK frame (950) can be performed within the TXOP (925).

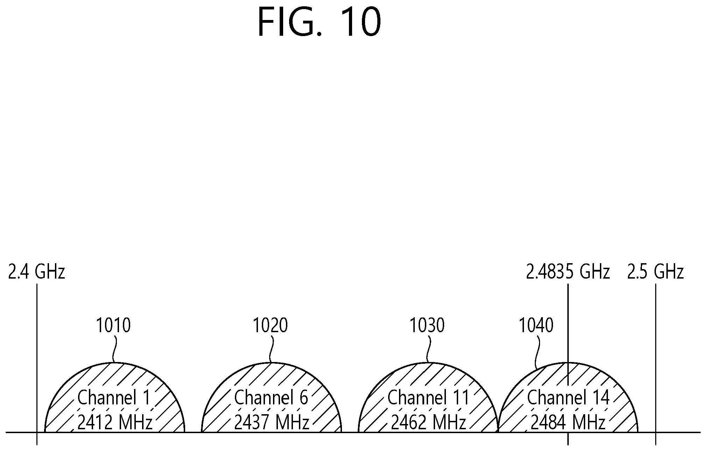

FIG. 10 illustrates an example of channels used/supported/defined within the 2.4 GHz band.

The 2.4 GHz band may also be referred to by other names, such as the first band (band). Furthermore, the 2.4 GHz band may refer to a frequency range in which channels with a center frequency adjacent to 2.4 GHz (e.g., channels with a center frequency between 2.4 and 2.5 GHz) are used/supported/defined.

The 2.4 GHz band may include multiple 20 MHz channels. Each 20 MHz channel within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. Channel indices may be referred to by various names, such as channel numbers. The specific numerical values of the channel indices and center frequencies may vary.

Figure 10 illustrates four channels within the 2.4 GHz band. The illustrated first frequency range (1010) through fourth frequency range (1040) may each include one channel. For example, the first frequency domain (1010) may include channel 1 (a 20 MHz channel having an index of 1). At this time, the center frequency of channel 1 may be set to 2412 MHz. The second frequency domain (1020) may include channel 6. At this time, the center frequency of channel 6 may be set to 2437 MHz. The third frequency domain (1030) may include channel 11. At this time, the center frequency of channel 11 may be set to 2462 MHz. The fourth frequency domain (1040) may include channel 14. At this time, the center frequency of channel 14 may be set to 2484 MHz.

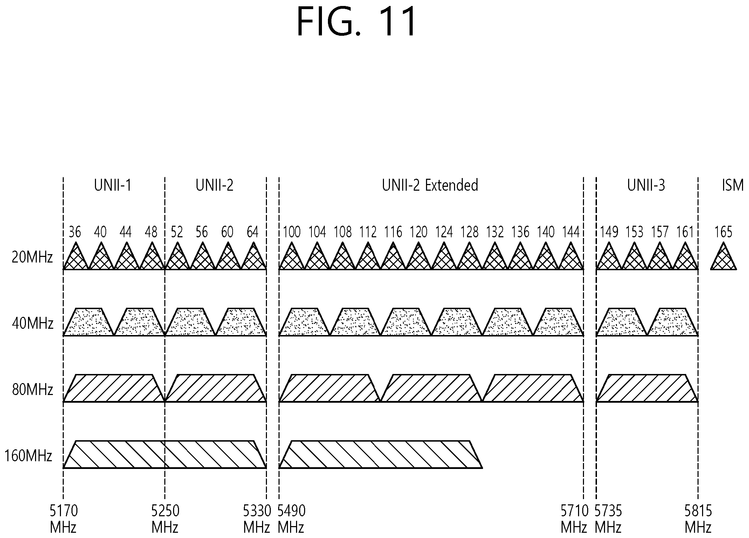

Figure 11 illustrates an example of channels used/supported/defined within the 5 GHz band.

The 5 GHz band may also be referred to as a second band, etc. The 5 GHz band may refer to a frequency range in which channels with a center frequency greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in Figure 11 are subject to change.

The multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2 Extended. UNII-3 may be referred to as UNII-Upper.

Multiple channels can be configured within the 5 GHz band, and the bandwidth of each channel can be variously configured, such as 20 MHz, 40 MHz, 80 MHz, or 160 MHz. For example, the 5170 MHz to 5330 MHz frequency range within UNII-1 and UNII-2 can be divided into eight 20 MHz channels. The 5170 MHz to 5330 MHz frequency range can be divided into four channels via a 40 MHz frequency band. The 5170 MHz to 5330 MHz frequency range can be divided into two channels via an 80 MHz frequency band. Alternatively, the 5170 MHz to 5330 MHz frequency range can be divided into one channel via a 160 MHz frequency band.

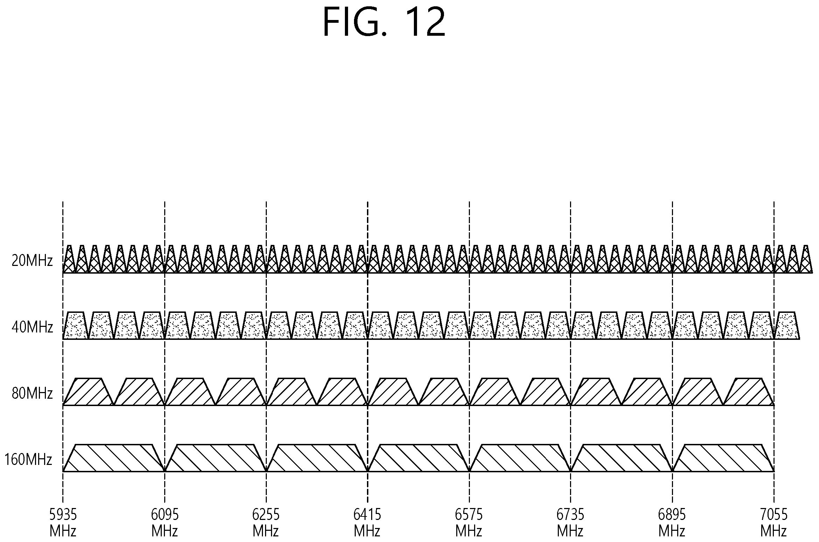

Figure 12 illustrates an example of channels used/supported/defined within the 6 GHz band.

The 6 GHz band may be referred to by other names, such as the third band/band. The 6 GHz band may refer to a frequency range where channels with a center frequency of 5.9 GHz or higher are used, supported, or defined. The specific values shown in Figure 12 may vary.

For example, the 20 MHz channel in Figure 12 may be defined starting from 5.940 GHz. Specifically, the leftmost channel among the 20 MHz channels in Figure 12 may have an index of 1 (or channel index, channel number, etc.) and may be assigned a center frequency of 5.945 GHz. In other words, the center frequency of channel index N may be determined as (5.940 + 0.005*N) GHz.

Accordingly, the indices (or channel numbers) of the 20 MHz channels in Figure 12 are 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Additionally, according to the aforementioned (5.940 + 0.005*N) GHz rule, the indices of the 40 MHz channels in Figure 12 can be 3, 11, 19, 27, 35, 43, 51, 59, 67, 75, 83, 91, 99, 107, 115, 123, 131, 139, 147, 155, 163, 171, 179, 187, 195, 203, 211, 219, and 227.

Hereinafter, the structure, type and/or sub-type of the MAC frame are described.

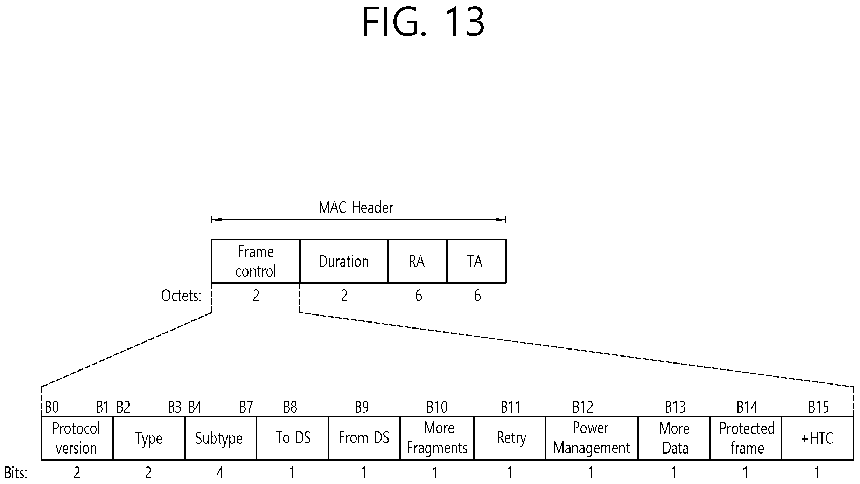

Figure 13 illustrates an example of a MAC frame header. As illustrated, the MAC frame may include a 2-octet frame control field/information, a 2-octet duration field/information, a 6-octet RA (Receiver Address) field/information, and a 6-octet TA (Transmitter Address) field/information. As illustrated in Figure 13, the four fields may be contiguous. The MAC header of Figure 13 may be modified in various ways, with new fields inserted between the four fields illustrated, or at least one of the fields illustrated may be omitted.

The MAC header illustrated in Figure 13 may be positioned at the very beginning of the MAC frame. That is, the MAC frame may include a MAC header as illustrated in Figure 13 and a MAC body field/information contiguous to the MAC header. The MAC frame including the MAC header of Figure 13 is inserted/included in the data field of the PPDU (e.g., UHR PPDU) illustrated in Figure 5.

The MAC frames included in the data field of the PPDU of the present specification can be classified into various types. For example, the MAC frames of the present specification can be classified into control frames, management frames, and data frames.

For example, the management frame includes the Association Request, Association Response, Reassociation Request, Reassociation Response, Probe Request, Probe Response, Beacon, Disassociation, Authentication, and Deauthentication frames/signals defined in conventional WLANs. For the management frame, the type fields (B3 and B2) in FIG. 13 are set to 00. Additionally, the values of the subtype fields (B7, B6, B5, B4) in Figure 13 are as follows: Association Request (0000), Association Response (0001), Reassociation Request (0010), Reassociation Response (0011), Probe Request (0100), Probe Response (0101), Beacon (1000), Disassociation (1010), Authentication (1011), Deauthentication (1100).

For example, the control frame includes the Trigger Beamforming Report Poll, NDP Announcement (NDPA), Control Frame Extension, Control Wrapper, Block Ack Request (BlockAckReq), Block Ack (BlockAck), PS-Poll, RTS, CTS, Ack, and CF-End frames/signals defined in conventional WLANs. For the control frame, the values of the type fields (B3 and B2) in Figure 13 are set to 01. Additionally, the values of the subtype fields (B7, B6, B5, B4) in FIG. 13 are as follows: Trigger (0010), Beamforming Report Poll (0100), NDP Announcement (0101), Control Frame Extension (0110), Control Wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc., as defined in conventional WLANs. For the data frame, the values of the type fields (B3 and B2) in FIG. 13 are set to 10.

The MAC frames/signals used in the present specification can be identified through the type field/information and subtype field/information described above. For example, a "trigger frame" in the present specification may refer to a MAC frame in which the type bits B3 and B2 in the frame control field of the MAC header are set to 01, while the subtype bits B7, B6, B5, and B4 in the frame control field are set to 0010. The various MAC frames described in the present specification are inserted/included in the data fields of various PPDUs (e.g., HE/VHT/HE/EHT/UHR PPDUs).

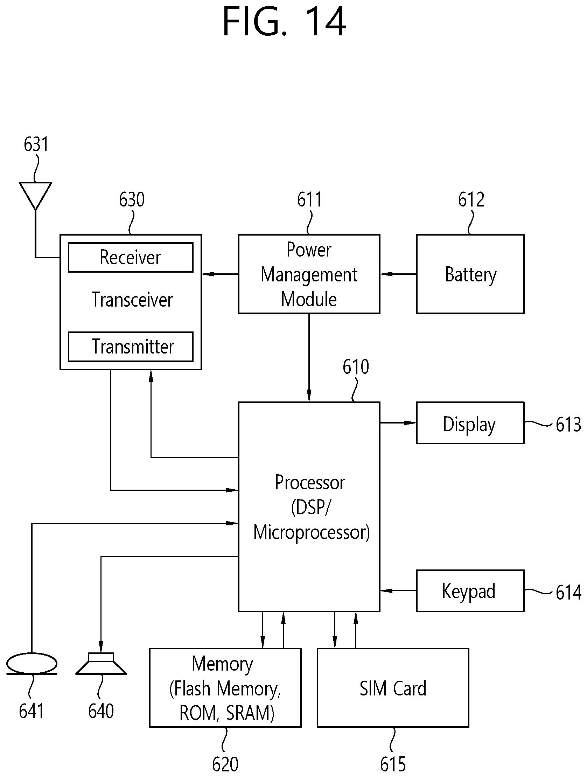

Figure 14 illustrates a modified example of a transmitting device and/or receiving device of the present specification.

The devices (e.g., AP STAs, non-AP STAs) illustrated in Figures 1 to 4 may be modified as illustrated in Figure 14. The transceiver (630) in Figure 14 may be identical to the transceivers (113, 123) in Figure 1. The transceiver (630) of FIG. 14 may include a receiver and a transmitter.

The processor (610) of FIG. 14 may be identical to the processors (111, 121) of FIG. 1. Alternatively, the processor (610) of FIG. 14 may be identical to the processing chip (114, 124) of FIG. 1.

The memory (150) of FIG. 14 may be identical to the memory (112, 122) of FIG. 1. Alternatively, the memory (150) of FIG. 14 may be a separate external memory different from the memory (112, 122) of FIG. 1.

Referring to FIG. 14, the power management module (611) manages power for the processor (610) and/or the transceiver (630). The battery (612) supplies power to the power management module (611). The display (613) outputs the results processed by the processor (610). The keypad (614) receives input to be used by the processor (610). The keypad (614) may be displayed on the display (613). The SIM card (615) may be an integrated circuit used to securely store an international mobile subscriber identity (IMSI) and associated keys, which are used to identify and authenticate subscribers in mobile devices such as mobile phones and computers.

Referring to FIG. 14, the speaker (640) may output sound-related results processed by the processor (610). The microphone (641) may receive sound-related input to be used by the processor (610).

Next Wi-Fi (beyond 11be or IEEE 802.11bn) aims to support ultra-high reliability (UHR) during signal transmission to an STA. For this, various technologies for supporting high throughput (HT), low latency (LL), extended range (ER), and the like are being considered. As such, when transmitting and receiving signals using various newly defined technologies to support ultra-high reliability (UHR), in order to increase efficiency of signal transmission by using transmission parameters suitable for channel conditions in which signals are transmitted and received, next-generation WLAN systems (e.g., IEEE 802.11bn and subsequent systems) may consider efficiently performing link adaptation (LA). In the present specification, an LA (link adaptation) method/apparatus for setting an optimal transmission parameter is proposed in order to efficiently transmit and receive signals related to a transmission channel in next-generation WLAN systems (e.g., IEEE 802.11bn and subsequent systems).

In next-generation WLAN systems, in order to increase transmission efficiency related to signal transmission and reception and to improve throughput, application of improved link adaptation (LA) may be considered to immediately apply (TX/RX) parameters suitable for channel conditions.

The LA proposed in the present specification may be called by various names. For example, the LA scheme proposed in the present specification may be interchangeably used with various names such as ILA (Improved LA), ELA (Enhanced LA), ULA (UHR LA), and the like. In the present specification, terms such as LA, ILA, ELA, ULA, and the like may be used interchangeably, and technical features of the present specification are not limited by use of a specific term. That is, a method/apparatus of the present specification having improved technical features compared to conventional schemes may be called by various terms such as LA, ILA, ELA, ULA, and the like below.

Improved LA (ILA) based on the present specification may be performed in a corresponding TXOP during DL/UL signal transmission and reception between an AP and a non-AP STA. In addition, when another signal is transmitted within the corresponding TXOP or a signal is transmitted within a next TXOP, a (TX/RX) parameter set through the ILA may be applied.

In order to apply LA of next-generation WLAN systems, an AP and a non-AP STA may indicate information related to whether improved link adaptation (ILA) is supported in a corresponding STA/Device (e.g., 1-bit information) through capability negotiation or exchange. For example, the information related to whether the ILA is supported may be included in a Management frame. For example, the Management frame may include the above-described Association Request, Association Response, Reassociation Request, Reassociation Response, Probe Request, Probe Response, Beacon, Disassociation, Authentication, Deauthentication frames/signals.

Additionally or alternatively, the capability is an example and may be defined as immediately Link adaptation.

Additionally or alternatively, in a case of supporting the ILA (improved Link adaptation), the capability may be set/indicated as a first value (e.g., 0/1). At this time, when the capability is set to the first value, an AP (or non-AP STA) supporting the ILA may collect information related to all bands/some bands of a wireless channel from data (e.g., QoS Data frame) received from a non-AP STA (or AP) and measure LA information (e.g., various TX/RX parameters including MCS information) for next transmission.

LA (i.e., the above-described ILA, ELA, or ULA, etc.) of next-generation WLAN systems may be performed based on the following method.

In order to perform ILA based on the present specification, an AP (or non-AP STA) may transmit a signal including a request related to link adaptation (LA) during data transmission (or during transmission of a PPDU including a data frame). A STA (i.e., AP or non-AP STA) receiving this may measure an LA parameter (i.e., TX/RX parameter) for next transmission using the received data (or PPDU) and perform feedback based on a measurement result. At this time, the procedure is performed within a TXOP (i.e., within one same TXOP), and a STA (i.e., AP or non-AP STA) receiving information related to LA may transmit a signal using the corresponding information (i.e., TX/RX parameter) within the TXOP for other data (or PPDU) or within a next TXOP (i.e., a TXOP immediately contiguous to the TXOP or a subsequent TXOP non-contiguous to the TXOP).

In order to quickly perform LA using channel information measured during signal transmission and reception as described above, a data frame may be defined as follows. As already described in FIG. 13 and the like, a MAC frame included in a data field of a PPDU of the present specification may be classified into various types, and for example, frames of the present specification may be classified into a control frame, a management frame, and a data frame. The following data frame may mean a frame excluding the above-described control frame and management frame.

### Technical Feature 1. New data frame for ILA

Technical Feature 1.A. In order to perform signal transmission/reception and LA measurement within one TXOP, a new data frame may be defined as follows.

Technical Feature 1.A.i. As an example, in order to efficiently perform feedback related to LA parameters set through LA measurement like conventionally configured QoS Data + CF-ACK + CF Poll, when supporting ILA, a data frame may be defined as QoS data + CF-ACK + CF LA.

Technical Feature 1.A.i.1. In order to indicate a newly defined data frame, it may be indicated using a data type field.

Technical Feature 1.A.i.1.A. As an example, a new subtype subfield of Frame Control field value may be allocated, and may be set to one of 0001 to 0011, 0101 to 0111, and 1101. More specifically, a subtype of a data field may be determined based on B3 and B2 type fields (or type bits/values) and B7, B6, B5, and B4 subtype fields (or subtype bits/values) shown in FIG. 13. For example, B3 and B2 type fields (or type bits/values) and B7, B6, B5, and B4 subtype fields (or subtype bits/values) included in a MAC header of a data frame of a WLAN system of the present specification may be set as follows. For example, for a data frame related to the above-described QoS Data + CF-ACK + CF Poll, B3 and B2 type values are set to 1 and 0, and B7, B6, B5, and B4 subtype values may be set to 1, 0, 1, and 1. For example, B3 and B2 type fields (or type bits/values) included in a Frame Control field in a MAC header of New data frame for ILA (or QoS data + CF-ACK + CF LA) of the present specification are set to 1 and 0, and B7, B6, B5, and B4 subtype values may be set to any one of 0001 to 0011, 0101 to 0111, and 1101 indicated in a table below.

**[Table 1]**

| Type Value B3 B2 | Type description | Subtype valueB7 B6 B5 B4 | Subtype description |
|---|---|---|---|
| 10 | Data | 0000 | Data |
| 10 | Data | 0001 - 0011 | |
| 10 | Data | 0100 | Null |
| 10 | Data | 0101 - 0111 | |
| 10 | Data | 1000 | QoS Data |
| 10 | Data | 1001 | QoS Data +CF-Ack |
| 10 | Data | 1010 | QoS Data +CF-Poll |
| 10 | Data | 1011 | QoS Data +CF-Ack +CF-Poll |
| 10 | Data | 1100 | QoS Null |
| 10 | Data | 1101 | |
| 10 | Data | 1110 | QoS CF-Poll |
| 10 | Data | 1111 | QoS CF-Ack +CF-Poll |

Technical Feature 1.A.i.2. In the above, the CF LA is transmitted by a STA that has received QoS DATA. That is, a STA that has received newly defined data frame (for example, new data frame where subtype is determined as QoS data + CF-ACK + CF LA) can transmit information related to LA (for example, information related to LA including TX/RX parameters).

Technical Feature 1.A.i.3. By configuring new data frame as described above, LA feedback transmission through LA measurement can be guaranteed and unnecessary channel contention can be reduced, so LA can be applied quickly.

Technical Feature 2. As another example different from the above, it can be indicated or identified that ILA of present specification is performed by using capability bit (for example, specific N-bit or 1-bit information within the above-described management frame) and/or data type field explicitly defined in the above Table 1 (for example, QoS Data + CF-Poll, QoS Data + CF-Ack + CF-Poll, etc.) without defining new data frame (for example, without newly defining the above-described Subtype value B7 B6 B5 B4).

Technical Feature 2.A. As described above, a STA supporting ILA based on a technique of exchanging or negotiating the capability bit may recognize the CF Poll as the CF LA and perform an LA operation of the present specification, when a Subtype description for a received data frame is set to QoS Data + CF-ACK + CF Poll.

Technical Feature 2.A.i. The CF Poll may be configured to include LA information measured through reception of a data frame.

Technical Feature 2.B. At this time, the CF Poll or CF LA may be generated and transmitted by a STA having received a data frame.

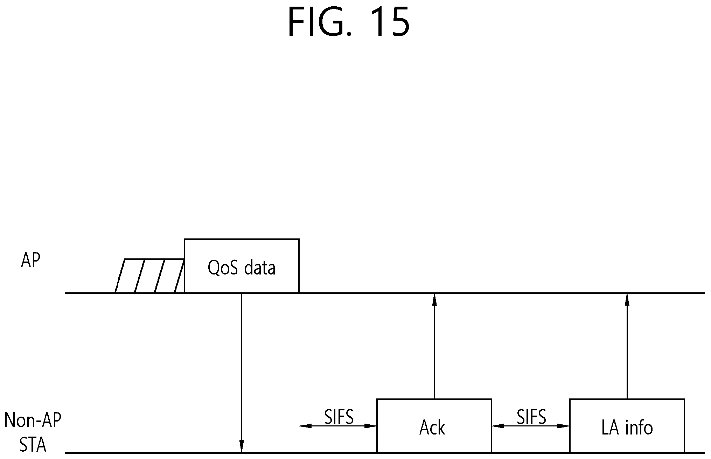

FIG. 15 illustrates an example in which an LA operation is performed based on the present specification.

The illustrated example is related to an example in which a QoS Data frame is transmitted by an AP, and a non-AP STA having received the corresponding QoS Data frame generates LA information (that is, information including a TX/RX parameter) and transmits the LA information to the AP. The QoS data frame illustrated in FIG. 15 may be a QoS Data + CF-Ack + CF-Poll frame in which Subtype values B7 B6 B5 B4 described in Table 1 are indicated as 1011. For example, in the above case, it may be indicated that the CF-Poll means the CF LA through a capability bit (for example, specific N-bit or 1-bit information within the above-described management frame) included in a management frame or the like before the QoS Data frame of FIG. 15 is transmitted. Additionally or alternatively, the QoS data frame illustrated in FIG. 15 may have the Subtype values B7 B6 B5 B4 described in Table 1 set to any one value among 0001 to 0011, 0101 to 0111, and 1101.

As illustrated in FIG. 15, for fast LA application, LA information may be transmitted through an LA frame, and at this time, the frame may be configured as follows. As illustrated in FIG. 15, an LA frame (a frame including LA info of FIG. 15) transmitted after an ACK frame may be configured as follows. In addition, as illustrated in FIG. 15, an IFS between a QoS data frame and an ACK frame may be determined as a SIFS, and an IFS between an ACK frame and an LA frame may be determined as a SIFS. That is, a STA having received QoS data may quickly transmit an LA frame without performing separate contention/backoff.

Detailed technical features applicable to the LA frame illustrated in FIG. 15 (that is, the frame including the LA info of FIG. 15) are as follows.

Technical Feature 3. An LA frame of the present specification may be configured in various ways. For example, in order to reduce frame overhead during LA transmission, an LA frame may be configured as a null data field not including a frame body.

Technical Feature 4. Since it is configured as a null data field, LA information included in the LA frame may be transmitted by being included in a MAC header.

Technical Feature 4.A. Additionally or alternatively, the LA info may be defined through an A-control field, and a new Control ID subfield value may be allocated to indicate ILA. Specifically, a data frame may include an HT control field with a length of 4 octets. That is, the HT control field may include bit B0 to bit B31, and among these, bit B2 to bit B31 may be configured as an A-Control field. The A-control field may include a Control ID subfield with a length of 4 bits. A control information subfield following the Control ID subfield with a length of 4 bits may be defined. The control information subfield defined within the A-control field may have various lengths. For example, when a value of the Control ID subfield is determined as 1, the control information subfield may include information related to an operating mode (OM), and a length of the control information subfield may be determined as 12 bits.

Technical Feature 4.A.i. As an example, the value of the Control ID subfield may be set to one value among 8 to 14. Specifically, when LA info of the present specification is defined within the A-control field, a value of a Control ID subfield with a length of 4 bits included within the A-control field may be set to one of 8 to 14. In addition, a length of a control information subfield following the Control ID subfield with a length of 4 bits may be set to 26 bits.

Technical Feature 4.A.ii. A newly defined ILA control field (for example, a TX/RX parameter included in the control information subfield with a length of 26 bits) may be configured as follows. For example, the ILA control field may include various types of LA information (that is, various TX/RX parameters described below). That is, LA information of the present specification may include information related to at least one of a PHY identifier, MRQ, RU allocation, PS 160, BW, MSI, MCS, and Nss, as follows.

Technical Feature 4.A.ii.1. According to an example of the present specification, LA measurement and feedback are performed through a received data frame (or signal). Accordingly, LA information to be described later may be configured by including only some of the following information in an unsolicited case.

Technical Feature 4.A.ii.2. LA info of the present specification may include information related to a protocol version (or PHY version). For example, it may be configured by including information related to a protocol version supporting ILA, and this information (PHY identifier) may be configured as 2 or 3 bits.

Technical Feature 4.A.ii.2.A. For consistency with a backward system, when supporting ILA of the present specification, the 2-bit or 3-bit value may not be set to 00 or 000.

Technical Feature 4.A.ii.3. LA info of the present specification may include information related to MRQ (MCS request). The information related to the MRQ (MCS request) may indicate a recommended MCS request or response/feedback for performing ILA.

Technical Feature 4.A.ii.4. LA info of the present specification may include information related to RU allocation. The information related to the RU allocation may be necessary when applying ILA for UL TB PPDU transmission and reception. For example, the RU allocation may have various lengths such as 8 bits (or 9 bits). Since the RU allocation may include information for a UL TB PPDU transmitted from a non-AP to an AP (for example, information related to a recommended RU), the RU allocation may be set to reserved when it is related to DL.

Technical Feature 4.A.ii.5. LA info of the present specification may include information related to PS 160. Similar to the 8/9 bit RU allocation, the information related to the PS 160 may be necessary for UL TB PPDU transmission and reception. The information related to the PS 160 may be 1-bit information indicating a primary 160 MHz channel or a secondary 160 MHz channel. Since the information related to the PS 160 may include information for a UL TB PPDU, the information related to the PS 160 may be set to reserved when it is related to DL.

Technical Feature 4.A.ii.6. LA info of the present specification may include information related to bandwidth (BW). The information related to the BW may have a length of 3 bits.

Technical Feature 4.A.ii.6.A. The information related to the BW indicates a BW for measuring information related to ILA and may indicate at least one of bandwidths of 20/40/80/160/320 MHz.

Technical Feature 4.A.ii.7. LA info of the present specification may include information related to MSI (MCS request sequence indicator).

Technical Feature 4.A.ii.7.A. The information related to the MSI may include information related to a sequence number used for identification for ILA to be performed. For example, a sequence number between 0 and 6 for identifying a specific MCS feedback request may be included.

Technical Feature 4.A.ii.8. LA info of the present specification may include information related to MCS.

Technical Feature 4.A.ii.8.A. The information related to the MCS may represent information related to a recommended MCS index set based on channel information and/or SINR (or RSSI) measured for ILA application.

Technical Feature 4.A.ii.8.B. The information related to the MCS is set when feedbacking ILA information, and in a case of a request frame requesting information related to MCS, the information related to the MCS may be set to reserved.

Technical Feature 4.A.ii.9. LA info of the present specification may include information related to Nss (for example, information related to a recommended number of spatial streams).

Technical Feature 4.A.ii.9.A. The information related to the Nss may be configured based on channel information measured for ILA of the present specification. A value of the Nss may be configured as a value of 8 or less. The information related to the Nss may be included within the LA info when configured as a response to MRQ. When configured as a request for MRQ, the information related to the Nss may be set to reserved.

An ILA operation according to the present specification may be modified in various ways.

For example, the ILA operation according to the present specification may be performed based on transmission and reception of a data frame and transmission and reception of a Block ACK (BA) frame.

When performing BA establishment for performing ILA of the present specification, negotiation for ILA may also be proceeded together. The ILA negotiation may be performed through a process of exchanging an Add Block ACK (ADDBA) request and an ADDBA response frame. For negotiation related to the ILA, the ADDBA request and response frame may be configured as follows.

In order to indicate that it is an ADDBA request/response frame including information related to ILA (for example, information related to negotiation of ILA of the present specification), the ADDBA request/response of the present specification may have the following technical features.

As an example, the ADDBA request/response including information related to the ILA may be defined as a name such as ILA/MRQ ADDBA request (or ILA/MRQ ADDBA response). A new Block ack action field value may be allocated to indicate a new ADDBA request/response.

According to a specific example, a value of a Block ack action field for the above-described ILA/MRQ ADDBA request (and/or ILA/MRQ ADDBA response) may be indicated using at least one value among 4-127, 131, or 135-255.

**[Table 2]**

| **Block Ack Action field values** | |
|---|---|
| 0 | ADDBA Request |
| 1 | ADDBA Response |
| 2 | DELBA |
| 3 | PBAC WinStart Update |
| 4-127 | |
| 128 | NDP ADDBA Request |
| 129 | NDP ADDBA Response |
| 130 | NDP DELBA |
| 131 | |
| 132 | BAT ADDBA Request |
| 133 | BAT ADDBA Response |
| 134 | BAT DELBA |
| 135-255 | |

The ILA/MRQ ADDBA request and/or ILA/MRQ ADDBA response defined as above may have the following features.

For example, the ILA/MRQ ADDBA request and/or ILA/MRQ ADDBA response may further include LA info (e.g., various TX/RX parameters including MCS information) according to the present specification in addition to conventional BA negotiation information.

For example, information related to MRQ (MCS request) and MFB (MCS feedback) may be defined as a new field of an ADDBA Request/response frame Action field. A conventional ADDBA Request/Response Action field included information related to ADDBA Request based on an order of 1 to 12. Based on the proposal of the present specification, LA information included in the ILA/MRQ ADDBA request and/or ILA/MRQ ADDBA response may be included based on an order of 13 or more.

The LA information field (i.e., LA info) in which the order value is defined as 13 or more may be configured with the following combination of information for MRQ or MFB. Specific features for the following information fields/bits may be identical to features of LA info included in the example of FIG. 15 described above.

First information field/bit: MRQ - an indication indicating whether it is MRQ or MFB.

Second information field/bit: MCS

The second information field/bit related to the MCS may be interpreted in various ways.

First, a case of negotiating whether to transmit LA info together with BA establishment through the (ILA/MRQ) ADDBA request/response is described as follows. When MRQ is indicated, the MCS information included in the LA info may be used/interpreted as a feedback request for MCS or a recommended MCS request. That is, it may be used to request MCS information when feedback for the LA info is performed. In a response, the MCS may be used as information related to MCS feedback or configured as reserved. Consequently, in this case, the LA info (for example, various TX/RX parameters including MCS information) may be transmitted together with BA (Block ACK).

Second, a case of transmitting LA info together with BA establishment through the (ILA/MRQ) ADDBA request/response is described as follows. In this case, the MCS information included in the request may be used/interpreted as a feedback request for MCS or a recommended MCS request. Also, the MCS information included in the response may be set as recommended MCS. In this case, the LA info is delivered through the ADDBA response, and the LA info may be used for transmission of a data frame (for example, QoS Data frame) transmitted after the ADDBA response. The QoS Data frame may be a new data frame for LA measurement as shown in FIG. 15, and in this case, it is also possible that new LA info is included in a BA frame corresponding to the QoS Data frame.

Third information field/bit: MSI - sequence indication for identification of LA performance

Fourth information field/bit: BW

Fifth information field/bit: RU allocation

Sixth information field/bit: PS 160

Additionally or alternatively, an existing ADDBA frame format may be used instead of a newly proposed ADDBA frame format. In this case, an indication related to LA or MRQ may be additionally included. Through this, information transmission for ILA performance may also be performed during ADDBA negotiation.

To indicate whether to perform LA during ADDBA negotiation or establishment, an ADDBA request frame may further include an indication of whether to perform LA establishment.

An ADDBA request frame transmitted for ILA performance is configured to include following information.

First information: ILA support field

The information may be transmitted through an ADDBA extension element, and as an example, may be set using a B3 bit and/or a B4 bit in the ADDBA extension element. The ILA support field may have various lengths, and for example, may have a length of 1 bit or 2 bits.

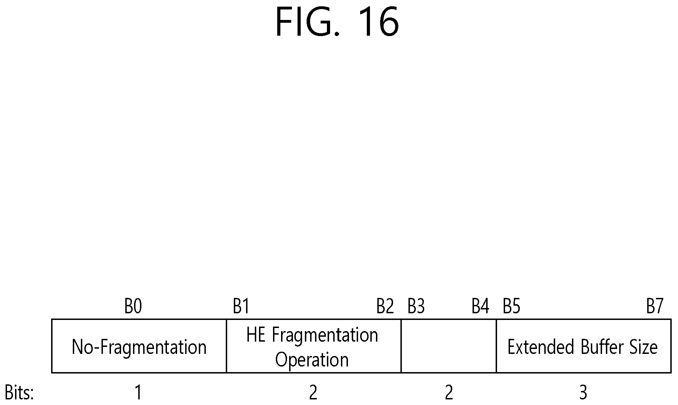

FIG. 16 is a view showing an example of an ADDBA extension element. Whether to perform LA based on the present specification may be indicated through the B3 bit and/or the B4 bit of FIG. 16.

A subfield configured through the B3 bit and/or the B4 bit of FIG. 16 may indicate that information related to a parameter for measurement of LA info is included.

The LA info may be defined and configured as a new order of an ADDBA Request frame Action field.

An ADDBA response frame may also be configured to include a corresponding indication to indicate whether to perform ILA, identically to the ADDBA request frame. That is, identically to the ADDBA request frame, the ILA support field may be included in an ADDBA extension element as shown in FIG. 16.

Based on the ILA support field value in the ADDBA response frame, whether to also transmit LA info when BA is transmitted may be determined. For example, when the ILA support field has a first value (for example, 0/1/00/11, etc.), a STA may perform feedback transmission (i.e., transmission for LA info) for information measured for LA while transmitting the BA.

Also, when the ILA support field is set in the ADDBA response frame, unlike the ADDBA request frame, LA information may be reserved or may not be included.

When ILA is established through exchange of the ADDBA request frame and the ADDBA response frame as described above, a BA frame (generated/transmitted thereafter) may be configured as follows for transmission of LA info of the present specification.

To indicate that it is a BA frame including information related to ILA (for example, LA info), a BA control field included in the BA frame may include information related to this (for example, the indication information).

As an example, to indicate that it is a BA frame including the LA info, a BA type of the BA control field may be utilized.

The BA frame including the LA info may be defined as a new BlockAck frame variant. For example, to identify the BA frame including the LA info (i.e., the new BlockAck frame variant), it may be defined using at least one value among BA Type values 0, 4-5, 9, and 12-15.

**[Table 3]**

| **BA Type** | **BlockAck frame variant** |
|---|---|
| 0 | |
| 1 | Extended Compressed |
| 2 | Compressed |
| 3 | Multi-TID |
| 4-5 | |
| 6 | GCR |
| 7 | EDMG Multi-TID |
| 8 | EDMG Compressed |
| 9 | |
| 10 | GLK-GCR |
| 11 | Multi-STA |
| 12-15 | |

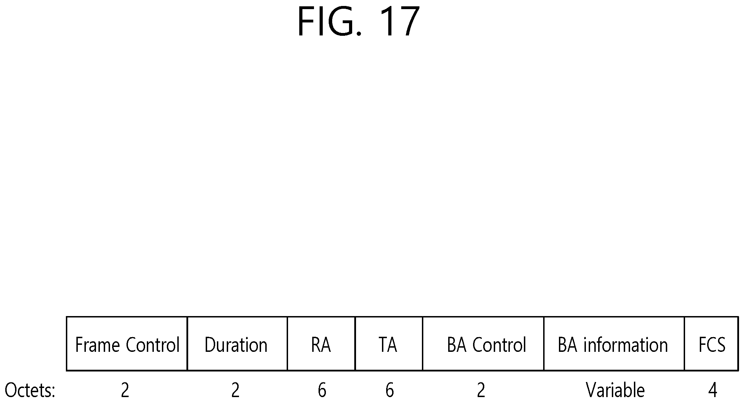

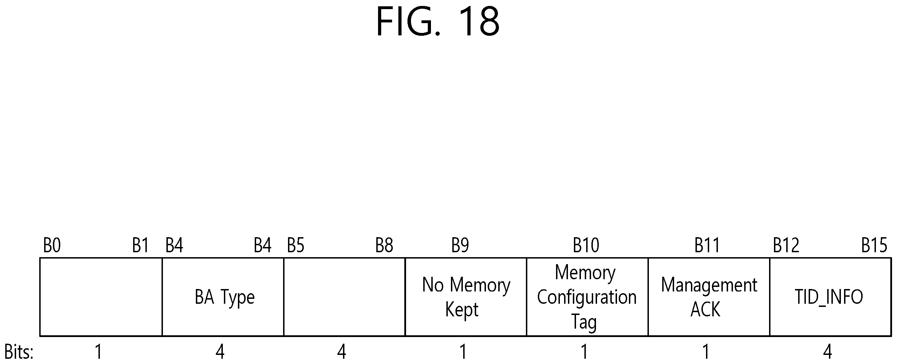

FIG. 17 is a view showing a structure of a BA frame. As shown, a BA control field having a length of 2 octets may be included. The BA control field shown in FIG. 17 may have a structure shown in FIG. 18. That is, a bitlinformation/subfield related to a BA type defined based on Table 3 may have a length of 4 bits as shown in FIG. 18, and the 4-bit information may identify a BA frame (i.e., a new BlockAck frame variant) including the LA info.

Additionally or alternatively, because each BA variant may include LA info, it may be newly defined as a frame in which LA info is included for each BA type.

Additionally or alternatively, instead of defining a new BlockAck frame variant as described above, the BA frame may be configured to include indication information indicating that the BA frame includes the LA info.

The indication is transmitted by being included in a BA control field, and may be defined as MFB presence.

FIG. 18 is a view showing a structure of a BA control field. As described above, the BA control field has a length of 2 octets. FIG. 18 may include a bit/information/field related to the MFB presence, and the bit/information/field related to the MFB presence may have a length of 1 bit. That is, the bit/information/field related to the MFB presence may have a first value (for example, 0 or 1) to indicate that the BA frame includes the LA info.

For example, the bit/information/field related to the MFB presence may be defined based on at least one bit among a B0 bit and B5 to B8 bits of the BA control field shown in FIG. 18.

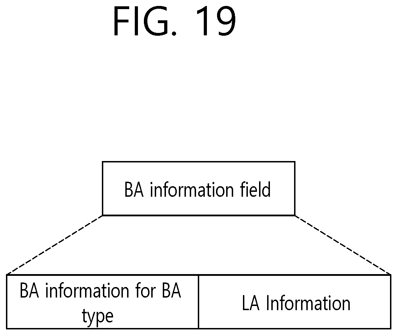

For example, when the information is set (for example, when MFB presence = 1), a BA Information field may include an LA parameters set (i.e., TX/RX parameters or LA info defined in the present specification). In this case, the BA information field including the LA parameters set may be configured as shown in FIG. 19.

FIG. 19 is an example of a BA information field based on the present specification. That is, the BA information field shown in FIG. 17 (i.e., a BA information n field following the BA control field) may be configured as shown in the example of FIG. 19. As shown, a BA information field defined based on an individual BlockAck frame variant (for example, a BlockAck frame variant defined in Table 3) is defined, and an LA info field following the BA information field may be defined. That is, when LA info is transmitted together in a BA frame, the LA information may be located in a BA information field as shown in FIG. 19.

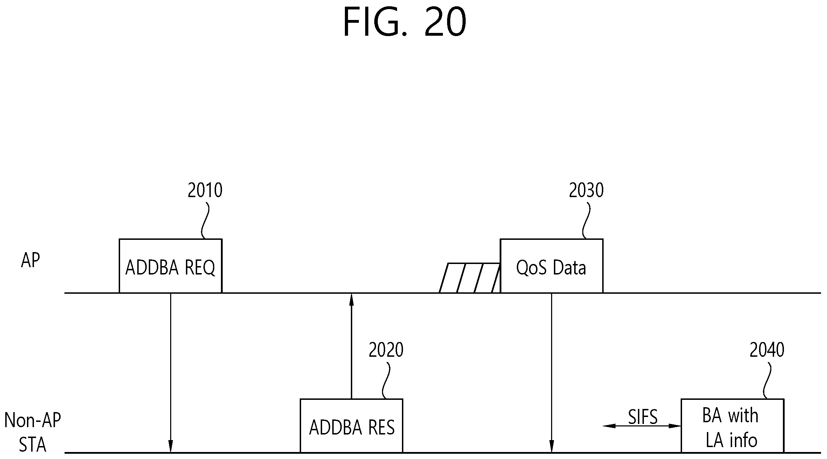

FIG. 20 is a view showing a procedure in which various frames proposed in the present specification are exchanged. Various frames proposed in the present specification may be exchanged as shown in FIG. 20. That is, as shown in FIG. 20, LA info transmitted and received through an ADDBA REQ frame (2010), an ADDBA RES frame (2020), and a BA frame (2040) may be exchanged. In the example of FIG. 20, the ADDBA REQ frame (2010) and the ADDBA RES frame (2020) are included, but as in the example of FIG. 15, even if frames (2010, 2020) related to ADDBA are omitted, the LA info may be delivered to a first STA (for example, AP).

As shown in FIG. 20, an ADDBA REQ frame (2010) may be transmitted by the first STA (for example, AP). In response (Response) to the ADDBA REQ frame (2010), an ADDBA RES frame (2020) may be transmitted by a second STA (for example, non-AP).

As described above, the ADDBA REQ frame (2010) and/or the ADDBA RES frame (2020) may include information for BA negotiation between the first STA and the second STA (for example, information for configuring ACK/NACK information included in the BA frame (2040) of FIG. 20), and may further include information related to LA based on the present specification. For example, as described above, the ADDBA REQ frame (2010) and/or the ADDBA RES frame (2020) may include information related to the above-described MRQ (MCS request) and MFB (MCS feedback) (for example, at least one of the first information field/bit to the sixth information field/bit). For example, as described above, technical features related to Table 2 (for example, new Block Ack Action field values) may be applied to the ADDBA REQ frame (2010) and/or the ADDBA RES frame (2020). Additionally or alternatively, the above-described ILA support field may be included in the ADDBA REQ frame (2010) and/or the ADDBA RES frame (2020). Additionally or alternatively, the ADDBA extension element shown in FIG. 16 may be included in the ADDBA REQ frame (2010) and/or the ADDBA RES frame (2020).

As described above, the ADDBA REQ (2010) may be called an (ILA/MRQ) ADDBA request. Also, the ADDBA RES (2020) may be called an (ILA/MRQ) ADDBA response. Also, as described above, LA info may be transmitted together with BA establishment through the ADDBA REQ (2010) and the ADDBA RES (2020), or LA info may be transmitted through the BA frame (2040). For example, when LA info is transmitted together with BA establishment through the ADDBA REQ (2010) and the ADDBA RES (2020), MCS information included in the ADDBA REQ (2010) may be used/interpreted as a feedback request for MCS or a recommended MCS request. In this case, MCS information included in the ADDBA RES (2020) may be set as recommended MCS. That is, the LA info is delivered to the first STA (for example, AP) through the ADDBA RES (2020), and the LA info may be used for transmission of a data frame (for example, QoS Data frame (2030)) transmitted after the ADDBA RES (2020).

Additionally or alternatively, QoS Data (2030) shown in FIG. 20 may include various technical features proposed in the present specification. For example, a subtype of the QoS Data (2030) may be determined as the above-described QoS data + CF-ACK + CF LA. Additionally or alternatively, the subtype of the QoS Data (2030) may be set to various subtypes shown in Table 1. Additionally or alternatively, the QoS Data (2030) may include at least one of Technical Feature 1 (and its detailed features), Technical Feature 2 (and its detailed features), Technical Feature 3, and/or Technical Feature 4 (and its detailed features).

The QoS Data (2030) may be transmitted after the first STA (for example, AP) acquires a transmission opportunity (TXOP) through a back-off process or the like. After the QoS (2030) is transmitted, a BA frame (2040) including ACK/NACK information corresponding to the QoS (2030) may be configured. For example, as shown in FIG. 20, an IFS between a signal/frame transmitting the BA frame (2040) and a signal/frame transmitting the QoS Data (2040) may be set to SIFS. That is, the QoS Data (2030) and the BA frame (2040) may be exchanged within the same TXOP.

Information related to the above-described LA may be included in the BA frame (2040). That is, the LA info may be included in the BA frame (2040) in addition to BA information related to ACK/NACK information for the QoS Data (2030) frame. The LA info included in the BA frame (2040) may include various TX/RX parameters related to channel conditions. For example, the LA info included in the BA frame (2040) may include information related to at least any one of Technical Feature 4.A.ii.1 to Technical Feature 4.A.ii.9.A.

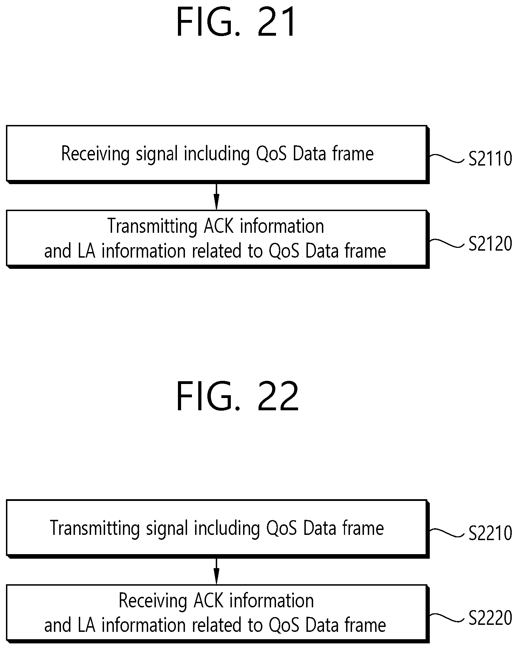

FIG. 21 is a procedure flowchart showing an example of a STA in which the above-described technical features are performed.

The procedure of FIG. 21 may be performed in a STA (for example, AP STA).

As shown in FIG. 21, a station (STA) may receive a signal including a Quality of Service (QoS) data frame (S2110). For example, the QoS data frame described in step S2110 may be the QoS data shown in FIG. 15 or the QoS data shown in FIG. 20. For example, the QoS data frame described in step S2110 may include various technical features proposed in the specification. For example, a subtype of the QoS data frame described in step S2110 may be determined as the above-described QoS data + CF-ACK + CF LA. Additionally or alternatively, the subtype of the QoS data frame described in step S2110 may be set to various subtypes shown in Table 1. Additionally or alternatively, the QoS data frame described in step S2110 may include at least one of Technical Feature 1 (and its detailed features), Technical Feature 2 (and its detailed features), Technical Feature 3, and/or Technical Feature 4 (and its detailed features).

As shown in FIG. 21, a STA (station) may transmit ACK (Acknowledgement) information related to the QoS data frame and LA (Link Adaptation) information related to the QoS data (S2120). For example, the ACK information described in step S2120 may include ACK/NACK information transmitted through an ACK frame shown in FIG. 15. Additionally or alternatively, the ACK information described in step S2120 may include Block ACK/NACK information included in a BA frame (2040) shown in FIG. 20. For example, the LA information described in step S2120 may include LA information included in an LA frame shown in FIG. 15. Additionally or alternatively, the LA information described in step S2120 may include LA information included in a BA frame (2040) shown in FIG. 20.

The ACK information and the LA information received through step S2120 may be received through one frame as in the example of FIG. 20, or may be sequentially received based on SIFS as in the example of FIG. 15.

The LA information received through step S2120 may include various LA information and/or TX/RX parameters proposed in the present specification. For example, the LA information received through step S2120 may include at least one of the above-described Technical Feature 4 (and its detailed features).

The procedure of FIG. 21 may be variously modified. For example, a step of transmitting and receiving an ADDBA REQ frame and an ADDBA RES frame proposed in the present specification may be further included. For example, as in the procedure shown in FIG. 20, it is preferable that the transmission and reception of the ADDBA REQ frame and the ADDBA RES frame are performed before the reception of the QoS data frame described in step S2110. For example, as in the procedure shown in FIG. 20, after the transmission and reception of the ADDBA REQ frame and the ADDBA RES frame are first performed, TXOP acquisition is performed by a first STA (for example, AP), and thereafter, the QoS data frame of step S2110 may be received by a second STA (for example, non-AP STA).

FIG. 22 is a procedure flowchart showing an example of a STA in which the above-described technical features are performed.

The procedure of FIG. 22 may be performed in a STA (for example, non-AP STA).

Based on step S2210 of FIG. 22, a step of transmitting a signal including a Quality of Service (QoS) data frame by a STA (station) proposed in the present specification may be performed. Technical features applied to step S2210 of FIG. 22 may be identical to technical features applied to step S2110 of FIG. 21.

Based on step S2220 of FIG. 22, a step of receiving ACK (Acknowledgement) information related to the QoS data frame and LA (Link Adaptation) information related to the QoS data by a STA (station) proposed in the present specification may be performed. Technical features applied to step S2220 of FIG. 22 may be identical to technical features applied to step S2120 of FIG. 21.

Technical features of the present specification (for example, technical features described in at least one of FIG. 1 to FIG. 22) may be performed by various devices. A device of the present specification may be a device described in FIG. 1/FIG. 14. The device of the present specification may include at least one processor; and at least one computer memory operably connectable to the at least one processor and storing instructions that perform operations based on being executed by the at least one processor.

For example, the processor may be a processor described in FIG. 1 and/or FIG. 14. That is, as described above, the processor of the present specification may include at least one of a digital signal processor (DSP), a central processing unit (CPU), a graphics processing unit (GPU), and a modulator and demodulator (Modem). The processor includes not only computers with various architectures such as a single/multiple processor architecture and a sequential (Von Neumann)/parallel architecture, but also specialized circuits such as FPGA, ASIC, signal processing devices, and other devices. For example, the processor of the present specification may be a SNAPDRAGON^{®} series processor manufactured by Qualcomm^{®}, an EXYNOS^{®} series processor manufactured by Samsung^{®}, an A series processor manufactured by Apple^{®}, an HELIO^{®} series processor manufactured by MediaTek^{®}, an ATOM^{®} series processor manufactured by INTEL^{®}, or an enhanced processor thereof.

For example, the instructions may mean computer program instructions executed by the at least one processor. The (computer program) instructions provide logic and/or routines so that the technical features of the present specification can be performed by the processor. By reading the at least one memory, the at least one processor can load and execute a computer program.

Computer program(s) defined by the instructions may arrive at the device (for example, STA) of the present specification through an appropriate delivery mechanism. The delivery mechanism may be, for example, a computer-readable storage medium, a computer program product, a memory device, a recording medium such as a CD-ROM or DVD, or an article of manufacture tangibly embodying the computer program. The delivery mechanism may be a signal configured to stably transmit a computer program through a wireless or electrical connection.

The (computer program) instructions may include software or firmware for a programmable processor (for example, programmable content of a hardware device whether instructions for a processor, or configuration settings for a fixed-function device, gate array or programmable logic device, etc.).

For example, the memory may be the memory described in FIG. 1 and/or FIG. 14. That is, as described above, the memory of the present specification may store control information related to the operation of a STA of the present specification or information related to a signal (for example, a PPDU including a management/control/data frame) transmitted or received by the corresponding STA.

A technical feature of the present specification may be implemented as at least one computer readable medium (CRM). The CRM includes instructions based on being executed by the at least one processor described above. The instructions stored in the CRM may be the computer program instructions described above.

The device of the present disclosure may further include a transceiver. The transceiver may be operably connected to the memory/processor, etc. The transceiver may be the transceiver illustrated in FIG. 1 and/or FIG. 14.

The technical features of the disclosure described above are applicable to a variety of applications or business models. For example, the technical features described above may be applied for wireless communication in devices that support artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

## Claims

1. A method performed in a Wireless Local Area Network (WLAN) system, the method comprising:
receiving, by a station (STA), a signal including a Quality of Service (QoS) data frame; and
transmitting, by the STA, Acknowledgement (ACK) information related to the QoS data frame and Link Adaptation (LA) information related to the QoS data,
wherein the LA information includes Modulation Coding Scheme (MCS) information.

2. The method of claim 1, wherein the QoS data frame is received through a first signal, the ACK information is transmitted through a second signal, the LA information is transmitted through a third signal, an Inter Frame Space (IFS) between the first signal and the second signal is set to a Short Inter Frame Space (SIFS), and an IFS between the second signal and the third signal is set to the SIFS.

3. The method of claim 1, wherein the QoS data frame includes a Medium Access Control (MAC) header, the MAC header includes a Frame Control field, the Frame Control field includes a type field and a subtype field contiguous to the type field, and based on that the QoS data frame triggers transmission of the LA information, a value of the subtype field has a pre-defined value.

4. The method of claim 1, wherein the subtype field is configured with B7 bit to B4 bit, and the pre-defined value for the B7 bit to B4 bit is set to any one of 0001 to 0011, 0101 to 0111, and 1101.

5. The method of claim 1, wherein the LA information is included in a MAC header within a Null Data Field (NDP) that does not include a frame body.

6. The method of claim 5, wherein the LA information includes at least one of information related to a Physical (PHY) Version related to Link Adaptation (LA), information related to an MCS Request (MRQ), information related to Resource Unit (RU) allocation related to an Uplink Trigger-Based Physical Protocol Data Unit (UL TB PPDU), Primary/Secondary (PS) 160 MHz information related to the UL TB PPDU, bandwidth information related to the LA, MRQ Sequence Indicator (MSI) information, and information related to a number of Spatial Streams.

7. The method of claim 1, wherein the ACK information is configured with Block ACK (BA) information.

8. The method of claim 7, further comprising:
receiving, by the STA, an Add Block ACK (ADDBA) Request frame related to the BA information; and
transmitting, by the STA, ADDBA response frame in response to the ADDBA Request frame.

9. The method of claim 8, wherein the BA information and the LA information are included in a same response frame, and an IFS between the QoS data frame and the response frame is set to the SIFS.

10. A station (STA) in a Wireless Local Area Network (WLAN), comprising:
at least one processor; and
at least one computer memory operatively connected to the at least one processor and storing instructions that, based on being executed by the at least one processor, perform operations comprising:
receiving a signal including a Quality of Service (QoS) data frame; and
transmitting Acknowledgement (ACK) information related to the QoS data frame and Link Adaptation (LA) information related to the QoS data,
wherein the LA information includes Modulation Coding Scheme (MCS) information.

11. The STA of claim 10, wherein the processor is further configured to carry out the steps of a method according to any one of claims 2 to 9.

12. A method performed in a Wireless Local Area Network (WLAN) system, the method comprising:
transmitting, by a station (STA), a signal including a Quality of Service (QoS) data frame; and
receiving, by the STA, Acknowledgement (ACK) information related to the QoS data frame and Link Adaptation (LA) information related to the QoS data,
wherein the LA information includes Modulation Coding Scheme (MCS) information.

13. The STA of claim 12, wherein the STA is further configured to carry out the steps of a method according to any one of claims 2 to 9.

14. A station (STA) in a Wireless Local Area Network (WLAN), comprising:
at least one processor; and
at least one computer memory operatively connected to the at least one processor and storing instructions that, based on being executed by the at least one processor, perform operations comprising:
transmitting a signal including a Quality of Service (QoS) data frame; and
receiving Acknowledgement (ACK) information related to the QoS data frame and Link Adaptation (LA) information related to the QoS data,
wherein the LA information includes Modulation Coding Scheme (MCS) information.

15. The STA of claim 14, wherein the STA is further configured to carry out the steps of a method according to any one of claims 2 to 9.

16. At least one computer readable medium (CRM) storing instructions that, based on being executed by at least one processor, perform operations comprising:
receiving, by the at least one processor, a signal including a Quality of Service (QoS) data frame; and
transmitting, by the at least one processor, Acknowledgement (ACK) information related to the QoS data frame and Link Adaptation (LA) information related to the QoS data,
wherein the LA information includes Modulation Coding Scheme (MCS) information.
